(19) Europäisches Patentamt / European Patent Office / Office européen des brevets

(11) **EP 3 497 486 B1**

(12) **EUROPEAN PATENT SPECIFICATION**

(45) Date of publication and mention of the grant of the patent:
**08.06.2022  Bulletin 2022/23**

(21) Application number: **17841886.9**

(22) Date of filing: **10.08.2017**

(51) International Patent Classification (IPC):
**G01V 3/30** *(2006.01)*    **E21B 47/092** *(2012.01)*

(52) Cooperative Patent Classification (CPC):
**G01V 3/30; E21B 47/092**

(86) International application number:
**PCT/US2017/046234**

(87) International publication number:
**WO 2018/034927 (22.02.2018 Gazette 2018/08)**

(54) **DETERMINING A FULL ELECTROMAGNETIC COUPLING TENSOR USING MULTIPLE ANTENNAS**

BESTIMMUNG EINES VOLLEN ELEKTROMAGNETISCHEN KUPPLUNGSTENSORS MIT MEHREREN ANTENNEN

DÉTERMINATION D'UN TENSEUR DE COUPLAGE ÉLECTROMAGNÉTIQUE TOTAL À L'AIDE DE MULTIPLES ANTENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.08.2016  US 201615236682**

(43) Date of publication of application:
**19.06.2019  Bulletin 2019/25**

(73) Proprietor: **Oliden Technology, LLC**
**Stafford, TX 77477 (US)**

(72) Inventor: **YANG, Jian**
**Sugar Land, TX 77479 (US)**

(74) Representative: **Lapienis, Juozas**
**MSP Europe UAB**
**21-92 Seimyniskiu Str.**
**09236 Vilnius (LT)**

(56) References cited:
**US-A1- 2011 140 701      US-A1- 2011 140 701**
**US-A1- 2014 107 929      US-A1- 2016 116 627**
**US-A1- 2016 209 540      US-B2- 7 239 145**
**US-B2- 7 239 145          US-B2- 9 389 332**

## Description

Priority Claim

This application claims priority to U.S. Patent Application No. 15/236,682, filed August 15, 2016.

Field of the Invention

The present disclosure relates generally to the field of downhole logging tools and particularly to downhole electromagnetic logging tools. Specifically, various techniques to determine a full electromagnetic coupling tensor of an earth formation using a tool comprising multiple antennas disposed in a borehole are disclosed.

Background

Various well logging techniques are known in the field of hydrocarbon exploration and production. These techniques use instruments or tools equipped with transmitters adapted to emit energy into a subsurface formation that has been penetrated by a borehole. In this description, "instrument" and "tool" will be used interchangeably to indicate, for example, an electromagnetic instrument (or tool), a wireline tool (or instrument), or a logging-while-drilling tool (or instrument). The emitted energy interacts with the surrounding formation to produce signals that are then detected and measured by one or more sensors. By processing the detected signal data, a profile of formation properties can be generated.

Electromagnetic logging tools, including electromagnetic induction and wave propagation logging tools, are used to determine the electrical properties of formations surrounding a borehole. Such logging tools obtain measurements relating to the resistivity (or its inverse, conductivity) of the formation that, when interpreted, allow one to infer various petrophysical properties of the formation and fluids therein. The physical principles of electromagnetic induction resistivity well logging are well known.

Electromagnetic logging tools use transmitter and receiver antennas. In some embodiments, such antennas may be operable as a transmitter and/or a receiver. Those skilled in the art will appreciate that an antenna may be used as a transmitter at one instant and as a receiver at another. It will also be appreciated that the transmitter-receiver configurations disclosed herein are interchangeable due to the principle of reciprocity, i.e., the "transmitter" may be used as a "receiver", and vice-versa.

Conventional electromagnetic logging tools employ axial transmitter and receiver antennas having magnetic dipole moments substantially along the longitudinal axis of the tool. Such tools do not have azimuthal sensitivity. In high angle or horizontal wells, measurements obtained with axial antennas do not contain information about the directionality of the formation that allows distinguishing whether the borehole is approaching, for example, an electrically conductive layer from above or below. Such information is used, for example, in well placement applications. Logging tools comprising one or more antennas having a magnetic dipole moment tilted or transverse with respect to the tool axis, such as those described, for example, in U.S. Pat. No. 5,508,616, U.S. Pat. No. 6, 163,155, U.S. Pat. No. 6,476,609, U.S. Pat. No. 7,656,160, U.S. Pat. No. 8,466,683, U.S. Pat. No. 7,755,361, U.S. Pat. Pub. No. 20140292340, and U.S. Pat. No. 9,389,332 have been proposed. Such logging tools can provide a directional measurement containing information about the directionality of the formation. It further provides more information used for various formation evaluation applications.

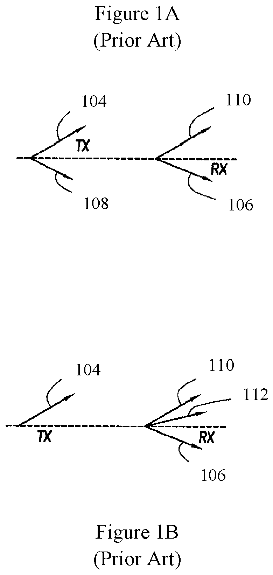

For example, in U.S. Pat. No. 7,656, 160, U.S. Pat. No. 7,755,361, and U.S. Pat. No. 8,466,683, methods of using a logging tool having three tilted transmitter (receiver) coils and a tilted receiver (transmitter) coil in rotation are proposed to determine a full tensor of the electromagnetic field coupling, which in turn is used to determine the subsurface formation properties. The "tilted" transmitter and receiver coils have magnetic moments having non-zero components along the z-axis, i.e., the tool rotation axis, but not entirely aligned with the z-axis. For illustration, two embodiments from U.S. Pat. No. 7,755,361 are shown in Figures 1A and IB. Figure 1A shows two tilted transmitters 104, 108 and two tilted receivers 106, 110, while Figure IB shows one tilted transmitter 104 and three tilted receivers 106, 110, 112.

US 2011/140701 A1 discloses a system and method to determine earth formation properties by positioning a logging tool within a wellbore in the earth formation, the logging tool having a tool rotation axis and a first, a second, and a third tilted transmitter coil, and a tilted receiver coil; rotating the logging tool about the tool rotation axis; energizing each transmitter coil; measuring a coupling signal between each transmitter coil and the receiver coil for a plurality of angles of rotation; determining a coupling tensor; and determining the earth formation properties using the coupling tensor.

US 7239145 B2 discloses sensor assemblies including transmitter and receiver antennas to respectively transmit or receive electromagnetic energy. The sensor assemblies are disposed in downhole tools adapted for subsurface disposal. The receiver is disposed at a distance less than six inches (15 cm) from the transmitter on the sensor body. The sensor transmitter or receiver includes an antenna with its axis tilted with respect to the axis of the downhole tool. A sensor includes a tri-axial system of antennas. Another sensor includes a cross-dipole antenna system.

EP 3 497 486 B1

Summary

A downhole electromagnetic logging tool having two or more antenna groups spaced along a longitudinal axis of the logging tool, each antenna group having one antenna or multiple antennas proximately located or collocated, each antenna group having at least one antenna having a dipole moment that is tilted relative to the longitudinal axis of the logging tool, at least one antenna group having, in addition to the at least one antenna having a dipole moment that is tilted relative to the longitudinal axis of the logging tool, at least one antenna having a dipole moment that is transverse or tilted relative to the longitudinal axis of the logging tool, and any given pair of antenna groups comprising at least four antennas with at most three of those antennas having dipole moments that are tilted relative to the longitudinal axis of the logging tool is disclosed. The logging tool is disposed in a wellbore penetrating a formation and, while rotating, measures a tool rotation angle, transmits an electromagnetic signal from one antenna group, and receives the electromagnetic signal with another antenna group. Sufficient information is obtained, from the received electromagnetic signal and the measured tool rotation angle, to determine all of the elements of an electromagnetic coupling tensor, and petrophysical properties of the formation using one or more elements of the determined electromagnetic coupling tensor are inferred.
This summary is provided to introduce a selection of concepts that are further described below in the detailed description. This summary is not intended to identify key or essential features of the claimed subject matter, nor is it intended to be used as an aid in limiting the scope of the claimed subject matter.

Brief Description of the Drawings

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion. Embodiments of determining are described with reference to the following figures. The same numbers are generally used throughout the figures to reference like features and components. Embodiments of a system and method to determine all nine elements of an electromagnetic (EM) tensor are described with reference to the following figures.

FIG. 1A is a schematic drawing of a prior art electromagnetic logging tool having two tilted transmitters and two tilted receivers.

FIG. 1B is a schematic drawing of a prior art electromagnetic logging tool having one tilted transmitter and three tilted receivers.

FIG. 2A is a schematic drawing of one embodiment of an electromagnetic logging tool having two tilted transmitters, one axial transmitter, and one tilted receiver, in accordance with the present disclosure.

FIG. 2B is an end view of the embodiment of FIG. 2A showing the relative azimuthal angles between the magnetic moments of the tilted transmitters and the tilted receiver, in accordance with the present disclosure.

FIG. 3A is a schematic drawing of one embodiment of an electromagnetic logging tool having two tilted transmitters, one axial receiver, and one tilted receiver, in accordance with the present disclosure.

FIG. 3B is an end view of the embodiment of FIG. 3A showing the relative azimuthal angles between the magnetic moments of the tilted transmitters and the tilted receiver, in accordance with the present disclosure.

FIG. 4A is a schematic drawing of one embodiment of an electromagnetic logging tool having a tilted transmitter, a transverse transmitter, an axial transmitter, and a tilted receiver, in accordance with the present disclosure.

FIG. 4B is an end view of the embodiment of FIG. 4A showing the relative azimuthal angles between the magnetic moments of the tilted transmitter, the transverse transmitter, and the tilted receiver, in accordance with the present disclosure.

FIG. 5A is a schematic drawing of one embodiment of an electromagnetic logging tool having a tilted transmitter, a transverse transmitter, a tilted receiver, and an axial receiver, in accordance with the present disclosure.

FIG. 5B is an end view of the embodiment of FIG. 5A showing the relative azimuthal angles between the magnetic moments of the tilted transmitter, the transverse transmitter, and the tilted receiver, in accordance with the present disclosure.

FIG. 6A is a schematic drawing of one embodiment of an electromagnetic logging tool having a tilted transmitter, a transverse transmitter, and two tilted receivers, in accordance with the present disclosure.

FIG. 6B is an end view of the embodiment of FIG. 6A showing the relative azimuthal angles between the magnetic moments of the tilted transmitter, the transverse transmitter, and the tilted receivers, in accordance with the present disclosure.

FIG. 7A is a schematic drawing of one embodiment of an electromagnetic logging tool having a tilted transmitter, a transverse transmitter, a tilted receiver, and a transverse receiver, in accordance with the present disclosure.

FIG. 7B is an end view of the embodiment of FIG. 7A showing the relative azimuthal angles between the magnetic moments of the tilted transmitter, the transverse transmitter, the tilted receiver, and the transverse receiver, in accordance with the present disclosure.

FIG. 8A is a schematic drawing of one embodiment of an electromagnetic logging tool having two tilted transmitters, a transverse transmitter, and a tilted receiver, in accordance with the present disclosure.

FIG. 8B is an end view of the embodiment of FIG. 8A showing the relative azimuthal angles between the magnetic moments of the tilted transmitters, the transverse transmitter, and the tilted receiver, in accordance with the present disclosure.

FIG. 9A is a schematic drawing of one embodiment of an electromagnetic logging tool having a tilted transmitter, two transverse transmitters, and a tilted receiver, in accordance with the present disclosure.

FIG. 9B is an end view of the embodiment of FIG. 9A showing the relative azimuthal angles between the magnetic moments of the tilted transmitter, the transverse transmitters, and the tilted receiver, in accordance with the present disclosure.

FIG. 10A shows a portion of a flow chart that may be used to determine an electromagnetic coupling tensor, in accordance with the present disclosure.

FIG. 10B shows a portion of a flow chart that may be used to determine an electromagnetic coupling tensor, in accordance with the present disclosure.

FIG. 10C shows a portion of a flow chart that may be used to determine an electromagnetic coupling tensor, in accordance with the present disclosure.

FIG. 10D shows a portion of a flow chart that may be used to determine an electromagnetic coupling tensor, in accordance with the present disclosure.

FIG. 10E shows a portion of a flow chart that may be used to determine an electromagnetic coupling tensor, in accordance with the present disclosure.

FIG. 10F shows a portion of a flow chart that may be used to determine an electromagnetic coupling tensor, in accordance with the present disclosure.

Detailed Description

In the following description, numerous details are set forth to provide an understanding of the present disclosure. However, it will be understood by those skilled in the art that the present disclosure may be practiced without these details and that numerous variations or modifications from the described embodiments are possible.

A system and method to determine all nine elements of an electromagnetic (EM) tensor from a transmitter T1 and a receiver R1: $V_{xx}^{T_1 R_1}$, $V_{xy}^{T_1 R_1}$, $V_{xz}^{T_1 R_1}$, $V_{yx}^{T_1 R_1}$, $V_{yy}^{T_1 R_1}$, $V_{yz}^{T_1 R_1}$, $V_{zx}^{T_1 R_1}$, $V_{zy}^{T_1 R_1}$, and $V_{zz}^{T_1 R_1}$ for the case in which multiple transmitters are in proximity or collocated is disclosed herein. Furthermore, since the relative gain factors, e.g., $G_{T_1R_1}^{T_2R_1}$ and $G_{T_1R_1}^{T_3R_1}$, can be determined, any of the non-zero elements of the EM tensor from a transmitter T2 and receiver R1, or from a transmitter T3 and receiver R1, can be determined by multiplying the gain factors $G_{T_1R_1}^{T_2R_1}$ or $G_{T_1R_1}^{T_3R_1}$ by the EM tensor elements from the transmitter T1 and receiver R1.

Using any of the various embodiments described herein and others within the scope of the claims below, one can generate one or more measurements using any of the nine elements of the EM tensor, such as the one defined by a magnitude ratio or a phase difference between two different linear combinations of any of the nine elements of the EM tensor to characterize the formation. One may use the measurement(s) characterizing the formation, for example, for geosteering and formation evaluation, such as by determining the orientation of a formation boundary, the distance to the formation boundary, and/or the resistivity on opposing sides of the formation boundary, etc.

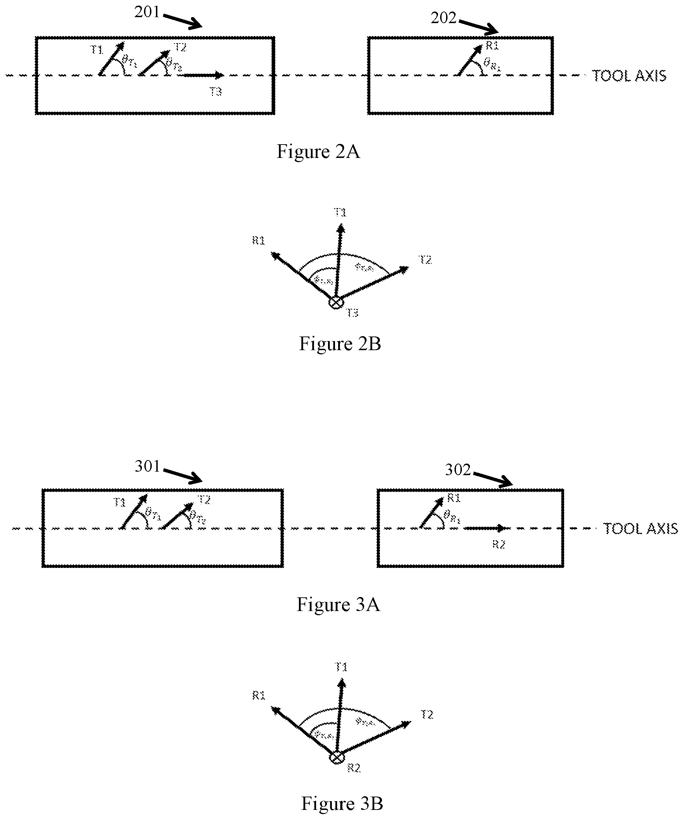

FIG. 2A is a schematic drawing of an example downhole tool in accordance with an embodiment of the present disclosure. The tool includes transmitter sub 201 and receiver sub 202. Transmitter sub 201 has three transmitter antennas T1, T2, and T3, placed in proximity to each other. T1 and T2 are tilted antennas having magnetic moments neither parallel nor orthogonal to the tool axis. T3 is an axial antenna having a magnetic moment substantially parallel to the tool axis. Receiver sub 202 includes one tilted receiver antenna R1 having a magnetic moment neither parallel nor orthogonal to the tool axis. The magnetic moments of the two tilted transmitter and one tilted receiver antennas are in different azimuthal planes as shown in an end view in FIG. 2B, where $\Phi_{T1R1}$ and $\Phi_{T2R2}$ are azimuth angles of T1 and T2 with respect to the receiver R1, respectively. The magnetic moments of the two transmitters T1 and T2 are also in different azimuthal planes. All the transmitter and receiver antennas can operate at multiple frequencies suitable for logging tools. The two subs 201, 202 are spaced apart by a desired distance with one or more logging tools or spacers connected between them. Although the three transmitters are shown placed in proximity, two or all of them can be collocated. Furthermore, although in this described embodiment the three transmitter antennas are located in a different sub than the receiver antenna, all antennas may be placed in the same sub.

When the tilted transmitter T1 transmits electromagnetic field energy at a certain frequency, the induced voltage $V^{T_1R_1}(\phi_{R_1})$ at the receiver R1 can be written according to an equation of the form:

$$V^{T_1R_1}\left(\phi_{R_1}\right) = V_0^{T_1R_1} + V_{1c}^{T_1R_1} * \cos\phi_{R_1} + V_{1s}^{T_1R_1} * \sin\phi_{R_1} + V_{2c}^{T_1R_1} * \cos(2\phi_{R_1}) + V_{2s}^{T_1R_1} * \sin(2\phi_{R_1}) \qquad \text{Eq. (1)}$$

where $\Phi_{R_1}$ is the azimuth angle of the receiver R1 relative to some reference. The five coefficients $V_0^{T_1R_1}$, $V_{1c}^{T_1R_1}$, $V_{1s}^{T_1R_1}$, $V_{2c}^{T_1R_1}$ and $V_{2s}^{T_1R_1}$, with $V_0^{T_1R_1}$ being termed the 0th harmonic coefficient, $V_{1c}^{T_1R_1}$ and $V_{1s}^{T_1R_1}$ being termed the 1st harmonic coefficients, and $V_{2c}^{T_1R_1}$ and $V_{2s}^{T_1R_1}$ being termed the 2nd harmonic coefficients, are linear combinations of the elements of an EM coupling tensor, and can be expressed as follows:

$$V_0^{T_1R_1} = V_{zz}^{T_1R_1}\cos(\theta_{R_1})\cos(\theta_{T_1}) + \frac{1}{2}(V_{xx}^{T_1R_1} + V_{yy}^{T_1R_1})\sin(\theta_{R_1})\sin(\theta_{T_1})\cos(\phi_{T_1R_1}) +$$

$$\frac{1}{2}(V_{xy}^{T_1R_1} - V_{yx}^{T_1R_1})\sin(\theta_{R_1})\sin(\theta_{T_1})\sin(\phi_{T_1R_1}) \qquad \text{Eq. (2a)}$$

$$V_{1c}^{T_1R_1} = V_{xz}^{T_1R_1}\sin(\theta_{R_1})\cos(\theta_{T_1}) + V_{zx}^{T_1R_1}\cos(\theta_{R_1})\sin(\theta_{T_1})\cos(\phi_{T_1R_1}) +$$

$$V_{zy}^{T_1R_1}\cos(\theta_{R_1})\sin(\theta_{T_1})\sin(\phi_{T_1R_1}) \qquad \text{Eq. (2b)}$$

$$V_{1s}^{T_1R_1} = V_{yz}^{T_1R_1}\sin(\theta_{R_1})\cos(\theta_{T_1}) + V_{zy}^{T_1R_1}\cos(\theta_{R_1})\sin(\theta_{T_1})\cos(\phi_{T_1R_1}) -$$

$$V_{zx}^{T_1R_1}\cos(\theta_{R_1})\sin(\theta_{T_1})\sin(\phi_{T_1R_1}) \qquad \text{Eq. (2c)}$$

$$V_{2c}^{T_1 R_1} = \frac{1}{2}(V_{xx}^{T_1 R_1} - V_{yy}^{T_1 R_1})\sin(\theta_{R_1})\sin(\theta_{T_1})\cos(\phi_{T_1 R_1}) +$$

$$\frac{1}{2}(V_{xy}^{T_1 R_1} + V_{yx}^{T_1 R_1})\sin(\theta_{R_1})\sin(\theta_{T_1})\sin(\phi_{T_1 R_1}) \qquad \text{Eq. (2d)}$$

$$V_{2s}^{T_1 R_1} = -\frac{1}{2}(V_{xx}^{T_1 R_1} - V_{yy}^{T_1 R_1})\sin(\theta_{R_1})\sin(\theta_{T_1})\sin(\phi_{T_1 R_1}) +$$

$$\frac{1}{2}(V_{xy}^{T_1 R_1} + V_{yx}^{T_1 R_1})\sin(\theta_{R_1})\sin(\theta_{T_1})\cos(\phi_{T_1 R_1}) \qquad \text{Eq. (2e)}$$

where $\theta_{T_1}$ is the tilt angle of the magnetic dipole moment of transmitter T1 with respect to the tool axis, $\theta_{R_1}$ is the tilt angle of the magnetic dipole moment of the receiver R1 with respect to the tool axis, and $\Phi_{T_1 R_1}$ is the azimuth angle of the magnetic moment of the transmitter T1 with respect to that of the receiver R1. It is noted that all nine elements of the EM coupling tensor $V_{xx}^{T_1 R_1}$, $V_{xy}^{T_1 R_1}$, $V_{xz}^{T_1 R_1}$, $V_{yx}^{T_1 R_1}$, $V_{yy}^{T_1 R_1}$, $V_{yz}^{T_1 R_1}$, $V_{zx}^{T_1 R_1}$, $V_{zy}^{T_1 R_1}$, and $V_{zz}^{T_1 R_1}$ contribute to the induced voltage $V^{T1R1}(\phi_{R_1})$.

When the tilted transmitter T2 transmits electromagnetic field energy at a certain frequency, the induced voltage $V^{T2R1}(\phi_{R_1})$ at the receiver R1 can be written in the same way as Eq. (1) and Eqs. (2) except for replacing index $T_1$ by $T_2$. Again in this case all nine elements of the EM tensor, $V_{xx}^{T_2 R_1}$, $V_{xy}^{T_2 R_1}$, $V_{xz}^{T_2 R_1}$, $V_{yx}^{T_2 R_1}$, $V_{yy}^{T_2 R_1}$, $V_{yz}^{T_2 R_1}$, $V_{zx}^{T_2 R_1}$, $V_{zy}^{T_2 R_1}$, and $V_{zz}^{T_2 R_1}$ contribute to the induced voltage $V^{T2R1}(\phi_{R_1})$. If the two transmitters T1 and T2 are in close proximity or collocated, the nine elements of the EM tensor from transmitter T2 are the same as those from the transmitter T1, apart from a constant factor which is the relative gain factor $G_{T_1 R_1}^{T_2 R_1}$ due to the construction of the antennas, electronic drifts, etc. In other words:

$$G_{T_1 R_1}^{T_2 R_1} = \frac{V_{xx}^{T_2 R_1}}{V_{xx}^{T_1 R_1}} = \frac{V_{xy}^{T_2 R_1}}{V_{xy}^{T_1 R_1}} = \frac{V_{xz}^{T_2 R_1}}{V_{xz}^{T_1 R_1}} = \frac{V_{yx}^{T_2 R_1}}{V_{yx}^{T_1 R_1}} = \frac{V_{yy}^{T_2 R_1}}{V_{yy}^{T_1 R_1}} = \frac{V_{yz}^{T_2 R_1}}{V_{yz}^{T_1 R_1}} = \frac{V_{zx}^{T_2 R_1}}{V_{zx}^{T_1 R_1}} = \frac{V_{zy}^{T_2 R_1}}{V_{zy}^{T_1 R_1}} = \frac{V_{zz}^{T_2 R_1}}{V_{zz}^{T_1 R_1}} \qquad \text{Eq. (3)}$$

When the axial transmitter T3 transmits electromagnetic field energy at a certain frequency, the induced voltage $V^{T3R1}(\phi_{R_1})$ at the receiver R1 can be written according to an equation of the form:

$$V^{T_3 R_1}\left(\phi_{R_1}\right) = V_0^{T_3 R_1} + V_{1c}^{T_3 R_1} * \cos\phi_{R_1} + V_{1s}^{T_3 R_1} * \sin\phi_{R_1} \qquad \text{Eq. (4)}$$

which only involves the 0th harmonic coefficient and the 1st harmonic coefficients. Those coefficients can be expressed in much simpler forms as follows:

$$V_0^{T_3 R_1} = V_{zz}^{T_3 R_1}\cos(\theta_{R_1}) \qquad \text{Eq. (5a)}$$

$$V_{1c}^{T_3 R_1} = V_{xz}^{T_3 R_1}\sin(\theta_{R_1}) \qquad \text{Eq. (5b)}$$

$$V_{1s}^{T_3 R_1} = V_{yz}^{T_3 R_1}\sin(\theta_{R_1}) \qquad \text{Eq. (5c)}$$

In this case only three elements $V_{xz}^{T_3 R_1}$, $V_{yz}^{T_3 R_1}$, and $V_{zz}^{T_3 R_1}$ of the EM tensor contribute to the induced voltage $V^{T3R1}(\phi_{R_1})$. If the transmitter T3 is in close proximity or collocated with T1, the three elements of the EM tensor from transmitter T3 are the same as those from the transmitter T1, apart from a constant factor which is the relative gain factor $G_{T_1 R_1}^{T_3 R_1}$ due to the construction of the antennas, electronic drifts, etc. In other words:

$$G_{T_1 R_1}^{T_3 R_1} = \frac{V_{xz}^{T_3 R_1}}{V_{xz}^{T_1 R_1}} = \frac{V_{yz}^{T_3 R_1}}{V_{yz}^{T_1 R_1}} = \frac{V_{zz}^{T_3 R_1}}{V_{zz}^{T_1 R_1}}$$

Eq. (6)

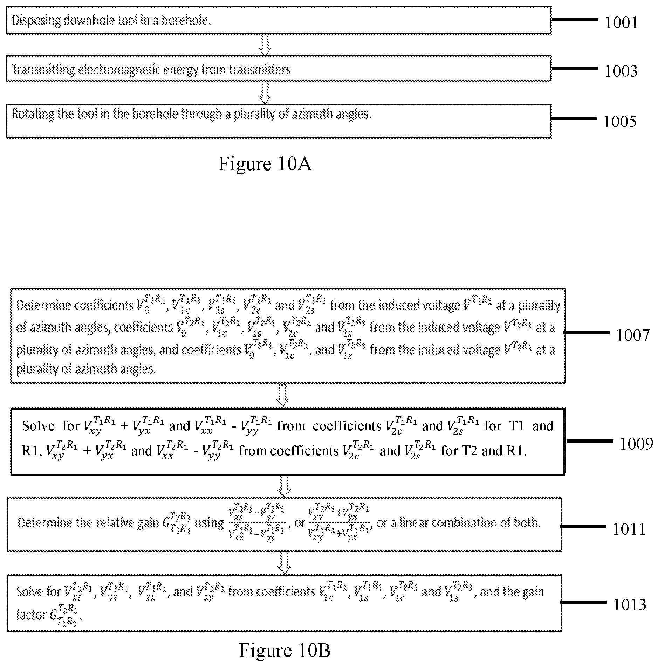

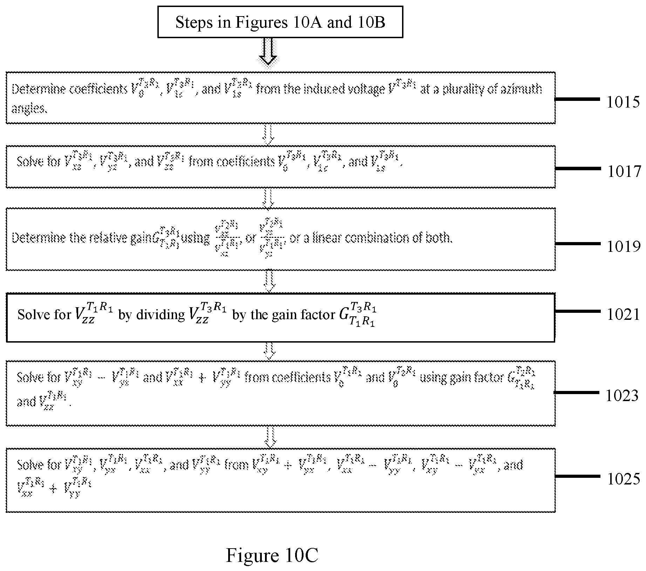

FIG. 10C, in conjunction with FIGS. 10A and 10B, shows a flowchart for the embodiment of FIG. 2A to determine the EM tensor in accordance with the present disclosure. The downhole tool is disposed in a borehole penetrating a formation (FIG. 10A - 1001). In this embodiment, the downhole tool includes at least two tilted transmitters and one axial transmitter placed in proximity to one another or collocated in one sub, and at least one tilted receiver placed in a different sub. The downhole tool transmits EM energy (FIG. 10A - 1003) while it is rotated in the borehole (FIG. 10A - 1005).

Coefficients $V_0^{T_1 R_1}$, $V_{1c}^{T_1 R_1}$, $V_{1s}^{T_1 R_1}$, $V_{2c}^{T_1 R_1}$ and $V_{2s}^{T_1 R_1}$ are determined from the induced voltage $V^{T_1 R_1}$ at a plurality of azimuth angles, coefficients $V_0^{T_2 R_1}$, $V_{1c}^{T_2 R_1}$, $V_{1s}^{T_2 R_1}$, $V_{2c}^{T_2 R_1}$ and $V_{2s}^{T_2 R_1}$ are determined from the induced voltage $V^{T_2 R_1}$ at a plurality of azimuth angles, and coefficients $V_0^{T_3 R_1}$, $V_{1c}^{T_3 R_1}$, and $V_{1s}^{T_3 R_1}$ are determined from the induced voltage $V^{T_3 R_1}$ at a plurality of azimuth angles (FIG. 10B - 1007). One can use, but is not limited to, the method described in U.S. Pat. No. 9,389,332 to determine the coefficients.

The sum $V_{xy}^{T_1 R_1} + V_{yx}^{T_1 R_1}$ and the difference $V_{xx}^{T_1 R_1} - V_{yy}^{T_1 R_1}$ can be solved for from the 2nd harmonic coefficients $V_{2c}^{T_1 R_1}$ and $V_{2s}^{T_1 R_1}$ for T1 and R1 using Eqs. (2d) and (2e):

$$V_{xx}^{T_1 R_1} - V_{yy}^{T_1 R_1} = 2 \frac{V_{2c}^{T_1 R_1} \cos(\phi_{T_1 R_1}) - V_{2s}^{T_1 R_1} \sin(\phi_{T_1 R_1})}{\sin(\theta_{R_1}) \sin(\theta_{T_1})}$$

Eq. (7a)

$$V_{xy}^{T_1 R_1} + V_{yx}^{T_1 R_1} = 2 \frac{V_{2c}^{T_1 R_1} \sin(\phi_{T_1 R_1}) + V_{2s}^{T_1 R_1} \cos(\phi_{T_1 R_1})}{\sin(\theta_{R_1}) \sin(\theta_{T_1})}$$

Eq. (7b)

Similarly, the sum $V_{xy}^{T_2 R_1} + V_{yx}^{T_2 R_1}$ and the difference $V_{xx}^{T_2 R_1} - V_{yy}^{T_2 R_1}$ can be solved for from the 2nd harmonic coefficients $V_{2c}^{T_2 R_1}$ and $V_{2s}^{T_2 R_1}$ for T2 and R1 using the equations above except for replacing index T1 by T2 (FIG. 10B - 1009). The gain factor can be determined by:

$$G_{T_1 R_1}^{T_2 R_1} = \frac{V_{xx}^{T_2 R_1} - V_{yy}^{T_2 R_1}}{V_{xx}^{T_1 R_1} - V_{yy}^{T_1 R_1}}$$

Eq. (8a)

or

$$G_{T_1 R_1}^{T_2 R_1} = \frac{V_{xy}^{T_2 R_1} + V_{yx}^{T_2 R_1}}{V_{xy}^{T_1 R_1} + V_{yx}^{T_1 R_1}}$$

Eq. (8b)

or a linear combination of both, or other ways using $V_{xy}^{T_1 R_1} + V_{yx}^{T_1 R_1}$, $V_{xx}^{T_1 R_1} - V_{yy}^{T_1 R_1}$, $V_{xy}^{T_2 R_1} + V_{yx}^{T_2 R_1}$, and $V_{xx}^{T_2 R_1} - V_{yy}^{T_2 R_1}$ (FIG. 10B - 1011).

One can further solve for $V_{xz}^{T_1 R_1}$, $V_{yz}^{T_1 R_1}$, $V_{zx}^{T_1 R_1}$, and $V_{zy}^{T_1 R_1}$ from coefficients $V_{1c}^{T_1 R_1}$, $V_{1s}^{T_1 R_1}$ using Eqs. (2b) and (2c), and $V_{1c}^{T_2 R_1}$ and $V_{1s}^{T_2 R_1}$ using the same equations except for replacing the transmitter index T1 by T2, and the gain factor $G_{T_1 R_1}^{T_2 R_1}$ determined previously (FIG. 10B - 1013):

$$\begin{bmatrix} V_{xz}^{T_1R_1} \\ V_{yz}^{T_1R_1} \\ V_{zx}^{T_1R_1} \\ V_{zy}^{T_1R_1} \end{bmatrix} = A^{-1} \begin{bmatrix} V_{1c}^{T_1R_1} \\ V_{1s}^{T_1R_1} \\ V_{1c}^{T_2R_1}/G_{T_1R_1}^{T_2R_1} \\ V_{1s}^{T_2R_1}/G_{T_1R_1}^{T_2R_1} \end{bmatrix} \qquad \text{Eq. (9a)}$$

where $A^{-1}$ is the inverse of the following matrix:

$$A = \begin{bmatrix} \sin(\theta_{R_1})\cos(\theta_{T_1}), & 0, & \cos(\theta_{R_1})\sin(\theta_{T_1})\cos(\phi_{T_1R_1}), & \cos(\theta_{R_1})\sin(\theta_{T_1})\sin(\phi_{T_1R_1}) \\ 0, & \sin(\theta_{R_1})\cos(\theta_{T_1}), & -\cos(\theta_{R_1})\sin(\theta_{T_1})\sin(\phi_{T_1R_1}), & \cos(\theta_{R_1})\sin(\theta_{T_1})\cos(\phi_{T_1R_1}) \\ \sin(\theta_{R_1})\cos(\theta_{T_2}), & 0, & \cos(\theta_{R_1})\sin(\theta_{T_2})\cos(\phi_{T_2R_1}), & \cos(\theta_{R_1})\sin(\theta_{T_2})\sin(\phi_{T_2R_1}) \\ 0, & \sin(\theta_{R_1})\cos(\theta_{T_2}), & -\cos(\theta_{R_1})\sin(\theta_{T_2})\sin(\phi_{T_2R_1}), & \cos(\theta_{R_1})\sin(\theta_{T_2})\cos(\phi_{T_2R_1}) \end{bmatrix} \text{Eq. (9b)}$$

The coefficients $V_0^{T_3R_1}$, $V_{1c}^{T_3R_1}$ and $V_{1s}^{T_3R_1}$ can be determined from the induced voltage $V^{T3R_1}$ at a plurality of azimuth angles (FIG. 10C - 1015). One can use, but is not limited to, the method described in U.S. Pat. No. 9,389,332 to determine the coefficients.

One can solve (FIG. 10C - 1017) for $V_{xz}^{T_3R_1}$, $V_{yz}^{T_3R_1}$ and $V_{zz}^{T_3R_1}$ from the coefficients $V_0^{T_3R_1}$, $V_{1c}^{T_3R_1}$, and $V_{1s}^{T_3R_1}$ using Eqs. (5a), (5b), and (5c):

$$V_{zz}^{T_3R_1} = V_0^{T_3R_1}/\cos(\theta_{R_1}) \qquad \text{Eq. (10a)}$$

$$V_{xz}^{T_3R_1} = V_{1c}^{T_3R_1}/\sin(\theta_{R_1}) \qquad \text{Eq. (10b)}$$

$$V_{yz}^{T_3R_1} = V_{1s}^{T_3R_1}/\sin(\theta_{R_1}) \qquad \text{Eq. (10c)}$$

Then the gain factor $G_{T_1R_1}^{T_3R_1}$ can be determined by:

$$G_{T_1R_1}^{T_3R_1} = \frac{V_{xz}^{T_3R_1}}{V_{xz}^{T_1R_1}} \qquad \text{Eq. (11a)}$$

or

$$G_{T_1R_1}^{T_3R_1} = \frac{V_{yz}^{T_3R_1}}{V_{yz}^{T_1R_1}} \qquad \text{Eq. (11b)}$$

or a linear combination of both, or other ways using $V_{xz}^{T_3R_1}$, $V_{yz}^{T_3R_1}$, $V_{xz}^{T_1R_1}$, and $V_{yz}^{T_1R_1}$, (FIG. 10C - 1019). The gain factor $G_{T_1R_1}^{T_3R_1}$ can then be used to solve (FIG. 10C - 1021) for $V_{zz}^{T_1R_1}$ together with Eq. (10a):

$$V_{zz}^{T_1R_1} = V_0^{T_3R_1}/[(\cos(\theta_{R_1})G_{T_1R_1}^{T_3R_1})] \qquad \text{Eq. (12)}$$

One can solve for $V_{xx}^{T_1R_1} + V_{yy}^{T_1R_1}$ and for $V_{xy}^{T_1R_1} - V_{yx}^{T_1R_1}$ from coefficients $V_0^{T_1R_1}$ and $V_0^{T_2R_1}$ using Eq. (2a) for the transmitter T1 and the same equation for transmitter T2 (with index replaced), together with the gain factor $G_{T_1R_1}^{T_2R_1}$ from Eq. (8a) or (8b) and $V_{zz}^{T_1R_1}$ from Eq. (12) (FIG. 10C - 1023):

$$V_{xx}^{T_1R_1} + V_{yy}^{T_1R_1} =$$

$$2\frac{(V_0^{T_1R_1} - V_{zz}^{T_1R_1}\cos(\theta_{R_1})\cos(\theta_{T_1}))\sin(\theta_{T_2})\sin(\phi_{T_2R_1}) - (V_0^{T_2R_1}/G_{T_1R_1}^{T_2R_1} - V_{zz}^{T_1R_1}\cos(\theta_{R_1})\cos(\theta_{T_2}))\sin(\theta_{T_1})\sin(\phi_{T_1R_1})}{\sin(\theta_{R_1})\sin(\theta_{T_1})\sin(\theta_{T_2})\sin(\phi_{T_2T_1})} \quad \text{Eq. (13a)}$$

$$V_{xy}^{T_1R_1} - V_{yx}^{T_1R_1} =$$

$$-2\frac{(V_0^{T_1R_1} - V_{zz}^{T_1R_1}\cos(\theta_{R_1})\cos(\theta_{T_1}))\sin(\theta_{T_2})\cos(\phi_{T_2R_1}) - (V_0^{T_2R_1}/G_{T_1R_1}^{T_2R_1} - V_{zz}^{T_1R_1}\cos(\theta_{R_1})\cos(\theta_{T_2}))\sin(\theta_{T_1})\cos(\phi_{T_1R_1})}{\sin(\theta_{R_1})\sin(\theta_{T_1})\sin(\theta_{T_2})\sin(\phi_{T_2T_1})} \quad \text{Eq. (13b)}$$

where $\phi_{T_2T_1}$ is the difference between the azimuth angles of the magnetic dipole moments of transmitter T1 and T2.

One can solve (FIG. 10C - 1025) for $V_{xy}^{T_1R_1}$, $V_{yx}^{T_1R_1}$, $V_{xx}^{T_1R_1}$, and $V_{yy}^{T_1R_1}$ from $V_{xy}^{T_1R_1} + V_{yx}^{T_1R_1}$, $V_{xx}^{T_1R_1} - V_{yy}^{T_1R_1}$, $V_{xy}^{T_1R_1} - V_{yx}^{T_1R_1}$, and $V_{xx}^{T_1R_1} + V_{yy}^{T_1R_1}$ given by Eqs. (13a), (13b), (7a), and (7b). Thus all nine elements of the EM tensor $V_{xx}^{T_1R_1}$, $V_{xy}^{T_1R_1}$, $V_{xz}^{T_1R_1}$, $V_{yx}^{T_1R_1}$, $V_{yy}^{T_1R_1}$, $V_{yz}^{T_1R_1}$, $V_{zx}^{T_1R_1}$, $V_{zy}^{T_1R_1}$, and $V_{zz}^{T_1R_1}$ from the transmitter T1 and receiver R1 are completely determined. Furthermore, since the relative gain factors $G_{T_1R_1}^{T_2R_1}$ and $G_{T_1R_1}^{T_3R_1}$ are also determined, any of the nine element of the EM tensor from transmitter T2 and receiver R1, or that from transmitter T3 and receiver R1 can also be determined by multiplying the gain factor $G_{T_1R_1}^{T_2R_1}$ or $G_{T_1R_1}^{T_3R_1}$ by the EM elements from the transmitter T1 and receiver R1.

It is to be noted that all embodiments of the downhole electromagnetic logging tool disclosed herein have two or more antenna groups spaced along a longitudinal axis of the logging tool, each antenna group having one antenna or multiple antennas proximally located or collocated. Each antenna group also has at least one antenna having a dipole moment that is tilted relative to the longitudinal axis of the logging tool. At least one antenna group has, in addition to the at least one antenna having a dipole moment that is tilted relative to the longitudinal axis of the logging tool, at least one antenna having a dipole moment that is transverse or axial relative to the longitudinal axis of the logging tool, and any given pair of antenna groups comprises at least four antennas.

It is also to be noted that at least one distinguishing aspect between what is claimed herein and the prior art is that the prior art fails to disclose, teach, or otherwise suggest requiring at least one antenna group to have either a transverse antenna or an axial antenna in addition to a tilted antenna. For example, the prior art embodiment shown in Figure 1A has two antenna groups, each having two tilted antennas, but neither antenna group has a transverse or axial antenna. Similar comments can be made regarding the prior art embodiment of Figure IB. The absence of a transverse or axial antenna in conjunction with a tilted antenna in at least one antenna group precludes practicing the method and apparatus described herein.

FIG. 3A is a schematic drawing of an example downhole tool in accordance with another embodiment of the present disclosure. The tool includes transmitter sub 301 and receiver sub 302. Transmitter sub 301 has two transmitter antennas T1 and T2, placed in proximity to each other. T1 and T2 are tilted antennas having magnetic moments neither parallel nor orthogonal to the tool axis. Receiver sub 302 includes one tilted receiver antenna R1 having a magnetic moment neither parallel nor orthogonal to the tool axis, and one axial antenna R2 having a magnetic moment substantially parallel to the tool axis. The magnetic moments of the two tilted transmitter and one receiver antennas are in different azimuthal planes as shown in an end view in FIG. 3B, where $\phi_{T_1R_1}$ and $\phi_{T_2R_1}$ are azimuth angles of T1 and T2 with respect to the receiver R1, respectively. The magnetic moments of the two transmitters T1, T2 are in different azimuthal planes. All the transmitter and receiver antennas can operate at multiple frequencies suitable for logging tools. The two subs 301, 302 are spaced apart by a desired distance with one or more logging tools or spacers connected between them. Although the two receiver are shown placed in proximity, they can be collocated. Furthermore, although the two transmitter antennas are shown located in a different sub than the two receivers, they may be placed in the same sub.

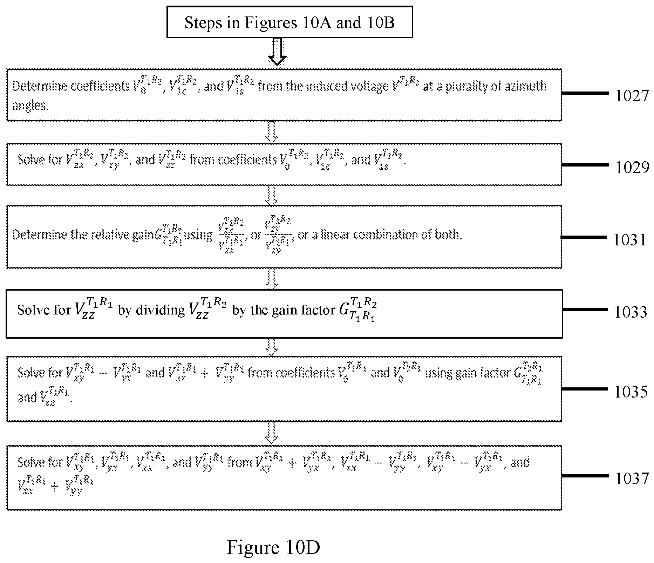

FIG. 10D, in conjunction with FIGS. 10A and 10B, shows a flowchart for the embodiment of FIG. 3A to determine the EM tensor in accordance with the present disclosure. In this case, we will not have a transmitter T3 and receiver R1 pair. Instead we will have two other transmitter/receiver pairs: the tilted transmitter T1 and axial receiver R2 pair, and the tilted transmitter T2 and axial receiver R2 pair. Therefore, the steps will remain the same except for those involving transmitter T3 and receiver R1, which should be replaced by the transmitter T1 and receiver R2, or the transmitter T2 and receiver R2. In the following we will use the transmitter T1 and receiver R2 to illustrate, but one can do the same using the transmitter T2 and receiver R2 by changing the index T1 to index T2 accordingly.

When the tilted transmitter T1 transmits electromagnetic field energy at a certain frequency, the induced voltage $V^{T_1 R_2}(\phi_{T_1})$ at the receiver R2 can be written according to an equation of the form:

$$V^{T_1 R_2}(\phi_{T_1}) = V_0^{T_1 R_2} + V_{1c}^{T_1 R_2} * \cos\phi_{T_1} + V_{1s}^{T_1 R_2} * \sin\phi_{T_1} \qquad \text{Eq. (14)}$$

where $\phi_{Tl}$ is the azimuth angle of the magnetic moment of transmitter T1 relative to some reference. The induced voltage $V^{T1R}_2(\phi_{T_1})$ only involves the 0th harmonic coefficient and the 1st harmonic coefficients because each term of the 2nd harmonic coefficients has a factor of $\sin(\theta_{R_2})$ which equals zero. One can determine coefficients $V_0^{T_1 R_2}$, $V_{1c}^{T_1 R_2}$ and $V_{1s}^{T_1 R_2}$ from the induced voltage $V^{T1R2}$ at a plurality of azimuth angles (FIG. 10D - 1027). For example, one can use, but is not limited to, the method described in U.S. Pat. No. 9,389,332 to determine the coefficients. The 0th and 1st harmonic coefficients can be expressed as follows:

$$V_0^{T_1 R_2} = V_{zz}^{T_1 R_2} \cos(\theta_{T_1}) \qquad \text{Eq. (15a)}$$

$$V_{1c}^{T_1 R_2} = V_{zx}^{T_1 R_2} \sin(\theta_{T_1}) \qquad \text{Eq. (15b)}$$

$$V_{1s}^{T_1 R_2} = V_{zy}^{T_1 R_2} \sin(\theta_{T_1}) \qquad \text{Eq. (15c)}$$

In this case only three elements of the EM tensor, $V_{zx}^{T_1 R_2}$, $V_{zy}^{T_1 R_2}$, and $V_{zz}^{T_1 R_2}$, contribute to the induced voltage $V^{T1R2}(\phi_{T_1})$.

One can solve (FIG. 10D \) for $V_{zx}^{T_1 R_2}$, $V_{zy}^{T_1 R_2}$, and $V_{zz}^{T_1 R_2}$ from the coefficients $V_0^{T_1 R_2}$, $V_{1c}^{T_1 R_2}$, and $V_{1s}^{T_1 R_2}$ using Eqs. (15a), (15b), and (15c):

$$V_{zz}^{T_1 R_2} = V_0^{T_1 R_2}/\cos(\theta_{T_1}) \qquad \text{Eq. (16a)}$$

$$V_{zx}^{T_1 R_2} = V_{1c}^{T_1 R_2}/\sin(\theta_{T_1}) \qquad \text{Eq. (16b)}$$

$$V_{zy}^{T_1 R_2} = V_{1s}^{T_1 R_2}/\sin(\theta_{T_1}) \qquad \text{Eq. (16c)}$$

If the receiver R2 is in close proximity or collocated with R1, the three elements of the EM tensor from transmitter T1 and receiver R2 are the same as those from the transmitter T1 and receiver R1, apart from a constant factor which is the relative gain factor $G_{T_1 R_1}^{T_1 R_2}$ due to the construction of the antennas, the electronic drifts, etc. Then the gain factor $G_{T_1 R_1}^{T_1 R_2}$ can be variously determined by:

$$G_{T_1R_1}^{T_1R_2} = \frac{V_{zx}^{T_1R_2}}{V_{zx}^{T_1R_1}} \qquad\qquad \text{Eq. (17a)}$$

or

$$G_{T_1R_1}^{T_1R_2} = \frac{V_{zy}^{T_1R_2}}{V_{zy}^{T_1R_1}} \qquad\qquad \text{Eq. (17b)}$$

or a linear combination of both, or other ways using $V_{zx}^{T_1R_2}$, $V_{zy}^{T_1R_2}$, $V_{zx}^{T_1R_1}$, and $V_{zy}^{T_1R_1}$ (FIG. 10D - 1031). The gain factor $G_{T_1R_1}^{T_1R_2}$ can then be used to solve for $V_{zz}^{T_1R_1}$ together with Eq. (16a) (FIG. 10D - 1033):

$$V_{zz}^{T_1R_1} = V_0^{T_1R_2}/[(\cos(\theta_{T_1})G_{T_1R_1}^{T_1R_2}] \qquad\qquad \text{Eq. (18)}$$

One can use equations Eq. (13a) and (13b) to find (FIG. 10D - 1035) $V_{xx}^{T_1R_1} + V_{yy}^{T_1R_1}$ and $V_{xy}^{T_1R_1} - V_{yx}^{T_1R_1}$ where $V_{zz}^{T_1R_1}$ is given by Eq. (18). In that manner, using the same steps as before (FIG. 10D - 1037), all nine elements of the EM tensor $V_{xx}^{T_1R_1}$, $V_{xy}^{T_1R_1}$, $V_{xz}^{T_1R_1}$, $V_{yx}^{T_1R_1}$, $V_{yy}^{T_1R_1}$, $V_{yz}^{T_1R_1}$, $V_{zx}^{T_1R_1}$, $V_{zy}^{T_1R_1}$, and $V_{zz}^{T_1R_1}$ from the transmitter T1 and receiver R1 can be completely determined.

One can use the data from the transmitter T2 and receiver R2 pair to derive equations similar to Eqs. (16b) and (16c). As a result, the relative gain $G_{T_1R_2}^{T_2R_2}$ can be easily calculated using $\frac{V_{zx}^{T_2R_2}}{V_{zx}^{T_1R_2}}$ or $\frac{V_{zy}^{T_2R_2}}{V_{zy}^{T_1R_2}}$. One can equate the relative gain factor $G_{T_1R_1}^{T_2R_1}$ with $G_{T_1R_2}^{T_2R_2}$ and solve for the relative azimuth angle between T1 and R1 (if it is not already known) from the following equation together with Eq. (8a):

$$G_{T_1R_2}^{T_2R_2} = \frac{V_{xx}^{T_2R_1} - V_{yy}^{T_2R_1}}{V_{xx}^{T_1R_1} - V_{yy}^{T_1R_1}} \qquad\qquad \text{Eq. (19a)}$$

or from the following equation together with Eq. (8b):

$$G_{T_1R_2}^{T_2R_2} = \frac{V_{xy}^{T_2R_1} + V_{yx}^{T_2R_1}}{V_{xy}^{T_1R_1} + V_{yx}^{T_1R_1}} \qquad\qquad \text{Eq. (19b)}$$

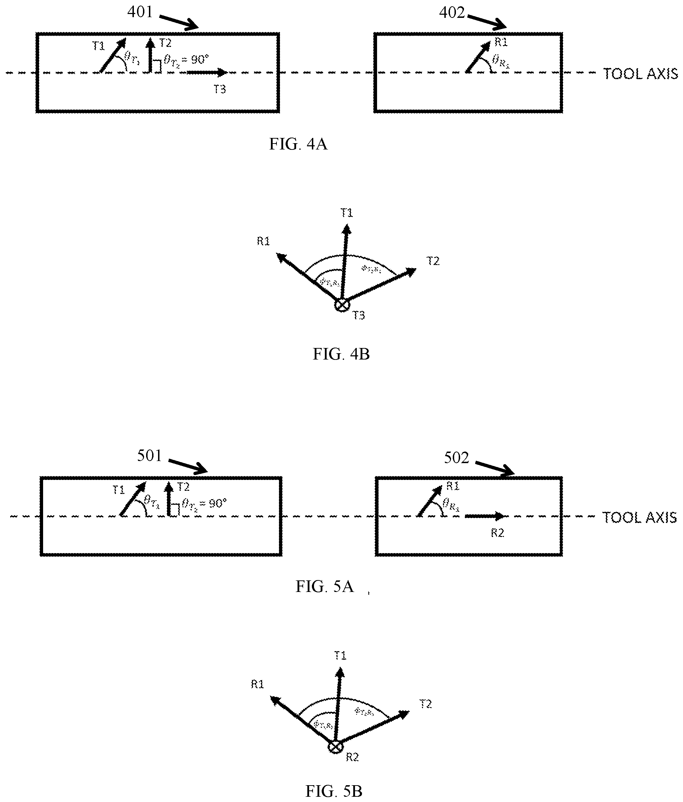

FIG. 4A is a schematic drawing of an example downhole tool in accordance with an embodiment of the present disclosure. The tool includes transmitter sub 401 and receiver sub 402. Transmitter sub 401 has three transmitter antennas T1, T2, and T3, placed in proximity to each other. T1 is a tilted antenna having a magnetic moment neither parallel nor orthogonal to the tool axis. T2 is a transverse antenna having a magnetic moment perpendicular to the tool axis. T3 is an axial antenna having a magnetic moment substantially parallel to the tool axis. Receiver sub 402 includes one tilted receiver antenna R1 having a magnetic moment neither parallel nor orthogonal to the tool axis. The magnetic moments of the tilted transmitter, the transverse transmitter, and the receiver antennas are in different azimuthal planes as shown in an end view in FIG. 4B, where $\Phi_{T_1R_1}$ and $\Phi_{T_2R_1}$ are azimuth angles of T1 and T2 with respect to the receiver R1, respectively. All the transmitter and receiver antennas can operate at multiple frequencies suitable for logging tools. The two subs 401, 402 are spaced apart by a desired distance with one or more logging tools or spacers connected between them. Although the three transmitters are shown placed in proximity, two or all of them can be collocated. Furthermore, although this described embodiment the three transmitter antennas are shown located in a different sub than the receiver antenna, they may be placed in the same sub.

When the transverse transmitter T2 transmits electromagnetic field energy at a certain frequency, the induced

voltage $V^{T_2 R_1}(\varPhi_{R_1})$ at the receiver R1 can be written in the same way as Eq. (1) and Eq. (2) except for replacing index $T_1$ by $T_2$, and setting $\theta_{T_2} = \pi/2$. Again in this case all nine elements of the EM tensor, $V_{xx}^{T_2 R_1}$, $V_{xy}^{T_2 R_1}$, $V_{xz}^{T_2 R_1}$, $V_{yx}^{T_2 R_1}$, $V_{yy}^{T_2 R_1}$, $V_{yz}^{T_2 R_1}$, $V_{zx}^{T_2 R_1}$, $V_{zy}^{T_2 R_1}$, and $V_{zz}^{T_2 R_1}$, except for $V_{zz}^{T_2 R_1}$, contribute to the induced voltage $V^{T_2 R_1}(\varPhi_{R_1})$.

If the two transmitters T1 and T2 are in close proximity or collocated, the nine elements (except for $V_{zz}^{T_2 R_1}$, which is zero) of the EM tensor from transmitter T2 are the same as those from the transmitter T1 apart from a constant factor, which is the relative gain factor $G_{T_1 R_1}^{T_2 R_1}$ due to the construction of the antennas, electronic drifts, etc. In other words:

$$G_{T_1 R_1}^{T_2 R_1} = \frac{V_{xx}^{T_2 R_1}}{V_{xx}^{T_1 R_1}} = \frac{V_{xy}^{T_2 R_1}}{V_{xy}^{T_1 R_1}} = \frac{V_{xz}^{T_2 R_1}}{V_{xz}^{T_1 R_1}} = \frac{V_{yx}^{T_2 R_1}}{V_{yx}^{T_1 R_1}} = \frac{V_{yy}^{T_2 R_1}}{V_{yy}^{T_1 R_1}} = \frac{V_{yz}^{T_2 R_1}}{V_{yz}^{T_1 R_1}} = \frac{V_{zx}^{T_2 R_1}}{V_{zx}^{T_1 R_1}} = \frac{V_{zy}^{T_2 R_1}}{V_{zy}^{T_1 R_1}} \qquad \text{Eq. (20)}$$

FIG. 10C, in conjunction with FIGS. 10A and 10B, shows a flowchart for the embodiment of FIG. 4A to determine the EM tensor in accordance with the present disclosure. The downhole tool is disposed in a borehole penetrating a formation (FIG. 10A - 1001). Recall this embodiment of the downhole tool includes a tilted transmitter, a transverse transmitter, and one axial transmitter placed in proximity or collocated in one transmitter sub, and at least one receiver placed in a different sub. The downhole tool transmits EM energy (FIG. 10A - 1003) while it is rotated in the borehole (FIG. 10A -1005).

Coefficients $V_0^{T_1 R_1}$, $V_{1c}^{T_1 R_1}$, $V_{1s}^{T_1 R_1}$, $V_{2c}^{T_1 R_1}$, and $V_{2s}^{T_1 R_1}$ are determined from the induced voltage $V^{T_1 R_1}$ at a plurality of azimuth angles, coefficients $V_0^{T_2 R_1}$, $V_{1c}^{T_2 R_1}$, $V_{1s}^{T_2 R_1}$, $V_{2c}^{T_2 R_1}$ and $V_{2s}^{T_2 R_1}$ are determined from the induced voltage $V^{T_2 R_1}$ at a plurality of azimuth angles, and coefficients $V_0^{T_3 R_1}$, $V_{1c}^{T_3 R_1}$, and $V_{1s}^{T_3 R_1}$ are determined from the induced voltage $V^{T_3 R_1}$ at a plurality of azimuth angles (FIG. 10B - 1007). One can use, but is not limited to, the method described in U.S. Pat. No. 9,389,332 to determine the coefficients.

Tensor element linear combinations $V_{xy}^{T_1 R_1} + V_{yx}^{T_1 R_1}$ and $V_{xx}^{T_1 R_1} - V_{yy}^{T_1 R_1}$, can be determined from coefficients $V_{2c}^{T_1 R_1}$ and $V_{2s}^{T_1 R_1}$ for T1 and R1 using Eq. (2d) and (2e):

$$V_{xx}^{T_1 R_1} - V_{yy}^{T_1 R_1} = 2 \frac{V_{2c}^{T_1 R_1} \cos(\phi_{T_1 R_1}) - V_{2s}^{T_1 R_1} \sin(\phi_{T_1 R_1})}{\sin(\theta_{R_1}) \sin(\theta_{T_1})} \qquad \text{Eq. (21a)}$$

$$V_{xy}^{T_1 R_1} + V_{yx}^{T_1 R_1} = 2 \frac{V_{2c}^{T_1 R_1} \sin(\phi_{T_1 R_1}) + V_{2s}^{T_1 R_1} \cos(\phi_{T_1 R_1})}{\sin(\theta_{R_1}) \sin(\theta_{T_1})} \qquad \text{Eq. (21b)}$$

One can also solve for $V_{xy}^{T_2 R_1} + V_{yx}^{T_2 R_1}$ and $V_{xx}^{T_2 R_1} - V_{yy}^{T_2 R_1}$ from coefficients $V_{2c}^{T_2 R_1}$ and $V_{2s}^{T_2 R_1}$ for T2 and R1 using the same equations except with index T1 replaced by T2, and setting $\theta_{T_2} = \pi/2$ (FIG. 10B - 1009). Then the gain factor can be determined variously by:

$$G_{T_1 R_1}^{T_2 R_1} = \frac{V_{xx}^{T_2 R_1} - V_{yy}^{T_2 R_1}}{V_{xx}^{T_1 R_1} - V_{yy}^{T_1 R_1}} \qquad \text{Eq. (22a)}$$

or

$$G_{T_1 R_1}^{T_2 R_1} = \frac{V_{xy}^{T_2 R_1} + V_{yx}^{T_2 R_1}}{V_{xy}^{T_1 R_1} + V_{yx}^{T_1 R_1}} \qquad \text{Eq. (22b)}$$

or a linear combination of both, or other ways using $V_{xy}^{T_1R_1} + V_{yx}^{T_1R_1}$ , $V_{xx}^{T_1R_1} - V_{yy}^{T_1R_1}$ , $V_{xy}^{T_2R_1} + V_{yx}^{T_2R_1}$ , and

$V_{xx}^{T_2R_1} - V_{yy}^{T_2R_1}$ (FIG. 10B - 1011).

One can also solve for $V_{xz}^{T_1R_1}$ , $V_{yz}^{T_1R_1}$ , $V_{zx}^{T_1R_1}$ , and $V_{zy}^{T_1R_1}$ from coefficients $V_{1c}^{T_1R_1}$ , $V_{1s}^{T_1R_1}$ using Eq. (2b) and (2c) and from coefficients $V_{1c}^{T_2R_1}$ , $V_{1s}^{T_2R_1}$ using the same equations except with the transmitter index T1 replaced by T2 and setting $\theta_{T_2} = \pi/2$, and the gain factor $G_{T_1R_1}^{T_2R_1}$ determined previously (FIG. 10B - 1013):

$$
\begin{bmatrix} V_{xz}^{T_1R_1} \\ V_{yz}^{T_1R_1} \\ V_{zx}^{T_1R_1} \\ V_{zy}^{T_1R_1} \end{bmatrix} = A^{-1} \begin{bmatrix} V_{1c}^{T_1R_1} \\ V_{1s}^{T_1R_1} \\ V_{1c}^{T_2R_1}/G_{T_1R_1}^{T_2R_1} \\ V_{1s}^{T_2R_1}/G_{T_1R_1}^{T_2R_1} \end{bmatrix}
\qquad \text{Eq. (23a)}
$$

where A $^{-1}$ is the inverse of the following matrix:

$$
A = \begin{bmatrix} \sin(\theta_{R_1})\cos(\theta_{T_1}), & 0, & \cos(\theta_{R_1})\sin(\theta_{T_1})\cos(\phi_{T_1R_1}), & \cos(\theta_{R_1})\sin(\theta_{T_1})\sin(\phi_{T_1R_1}) \\ 0, & \sin(\theta_{R_1})\cos(\theta_{T_1}), & -\cos(\theta_{R_1})\sin(\theta_{T_1})\sin(\phi_{T_1R_1}), & \cos(\theta_{R_1})\sin(\theta_{T_1})\cos(\phi_{T_1R_1}) \\ 0, & 0, & \cos(\theta_{R_1})\cos(\phi_{T_2R_1}), & \cos(\theta_{R_1})\sin(\phi_{T_2R_1}) \\ 0, & 0, & -\cos(\theta_{R_1})\sin(\phi_{T_2R_1}), & \cos(\theta_{R_1})\cos(\phi_{T_2R_1}) \end{bmatrix}
\qquad \text{Eq. (23b)}
$$

One can further determine coefficients $V_0^{T_3R_1}$ , $V_{1c}^{T_3R_1}$ and $V_{1s}^{T_3R_1}$ from the induced voltage $V^{T_3R_1}$ at a plurality of azimuth angles (FIG. 10C - 1015). For example, one may use, but is not limited to, the method described in U.S. Pat. No. 9,389,332 to determine the coefficients.

One can solve (FIG. 10C - 1017) for $V_{xz}^{T_3R_1}$ , $V_{yz}^{T_3R_1}$ , and $V_{zz}^{T_3R_1}$ from the coefficients $V_0^{T_3R_1}$ , $V_{1c}^{T_3R_1}$ , and

$V_{1s}^{T_3R_1}$ using Eq. (5a), (5b), and (5c):

$$
V_{zz}^{T_3R_1} = V_0^{T_3R_1}/\cos(\theta_{R_1})
\qquad \text{Eq. (24a)}
$$

$$
V_{xz}^{T_3R_1} = V_{1c}^{T_3R_1}/\sin(\theta_{R_1})
\qquad \text{Eq. (24b)}
$$

$$
V_{yz}^{T_3R_1} = V_{1s}^{T_3R_1}/\sin(\theta_{R_1})
\qquad \text{Eq. (24c)}
$$

Then the gain factor $G_{T_1R_1}^{T_3R_1}$ can be variously determined by:

$$
G_{T_1R_1}^{T_3R_1} = \frac{V_{xz}^{T_3R_1}}{V_{xz}^{T_1R_1}}
\qquad \text{Eq. (25a)}
$$

or

$$G_{T_1R_1}^{T_3R_1} = \frac{V_{yz}^{T_3R_1}}{V_{yz}^{T_1R_1}} \qquad \text{Eq. (25b)}$$

or a linear combination of both, or other ways using $V_{xz}^{T_3R_1}$, $V_{yz}^{T_3R_1}$, $V_{xz}^{T_1R_1}$, and $V_{yz}^{T_1R_1}$ (FIG. 10C - 1019). The gain factor $G_{T_1R_1}^{T_3R_1}$ can then be used to solve (FIG. 10C - 1021) for $V_{zz}^{T_1R_1}$ together with Eq. (24a):

$$V_{zz}^{T_1R_1} = V_0^{T_3R_1}/[(\cos(\theta_{R_1})G_{T_1R_1}^{T_3R_1})] \qquad \text{Eq. (26)}$$

One can also solve for $V_{xx}^{T_1R_1} + V_{yy}^{T_1R_1}$ and for $V_{xy}^{T_1R_1} - V_{yx}^{T_1R_1}$ from coefficients $V_0^{T_1R_1}$ and $V_0^{T_2R_1}$ using Eq. (2a) for the transmitter T1 and the same equation for transmitter T2 (except for replacing index T1 by T2 and setting $\theta_{T_2} = \pi/2$), together with the gain factor $G_{T_1R_1}^{T_2R_1}$ from Eq. (22a) or (22b) and $V_{zz}^{T_1R_1}$ from Eq. (26) (FIG. 10C - 1023):

$$V_{xx}^{T_1R_1} + V_{yy}^{T_1R_1} = 2 \frac{(V_0^{T_1R_1} - V_{zz}^{T_1R_1}\cos(\theta_{R_1})\cos(\theta_{T_1}))\sin(\phi_{T_2R_1}) - (V_0^{T_2R_1}/G_{T_1R_1}^{T_2R_1})\sin(\theta_{T_1})\sin(\phi_{T_1R_1})}{\sin(\theta_{R_1})\sin(\theta_{T_1})\sin(\theta_{T_2})\sin(\phi_{T_2T_1})} \qquad \text{Eq. (27a)}$$

$$V_{xy}^{T_1R_1} - V_{yx}^{T_1R_1} = -2 \frac{(V_0^{T_1R_1} - V_{zz}^{T_1R_1}\cos(\theta_{R_1})\cos(\theta_{T_1}))\cos(\phi_{T_2R_1}) - (V_0^{T_2R_1}/G_{T_1R_1}^{T_2R_1})\sin(\theta_{T_1})\cos(\phi_{T_1R_1})}{\sin(\theta_{R_1})\sin(\theta_{T_1})\sin(\theta_{T_2})\sin(\phi_{T_2T_1})} \qquad \text{Eq. (27b)}$$

where $\Phi_{T_2T_1}$ is the difference of the azimuth angles between the magnetic dipole moments of transmitter T1 and T2.

One can further solve (FIG. 10C - 1027) for $V_{xy}^{T_1R_1}$, $V_{yx}^{T_1R_1}$, $V_{xx}^{T_1R_1}$, and $V_{yy}^{T_1R_1}$ from $V_{xy}^{T_1R_1} + V_{yx}^{T_1R_1}$, $V_{xx}^{T_1R_1} - V_{yy}^{T_1R_1}$, $V_{xy}^{T_1R_1} - V_{yx}^{T_1R_1}$, and $V_{xx}^{T_1R_1} + V_{yy}^{T_1R_1}$ given by Eqs. (21a), (21b), (27a), and (27b).

Thus, all nine elements of the EM tensor $V_{xx}^{T_1R_1}$, $V_{xy}^{T_1R_1}$, $V_{xz}^{T_1R_1}$, $V_{yx}^{T_1R_1}$, $V_{yy}^{T_1R_1}$, $V_{yz}^{T_1R_1}$, $V_{zx}^{T_1R_1}$, $V_{zy}^{T_1R_1}$, and $V_{zz}^{T_1R_1}$ from the transmitter T1 and receiver R1 are completely determined. Furthermore, since the relative gain factors $G_{T_1R_1}^{T_2R_1}$ and $G_{T_1R_1}^{T_3R_1}$ are also determined, any elements of the EM tensor from transmitter T2 and receiver R1, or from transmitter T3 and receiver R1 can also be determined by multiplying the gain factors $G_{T_1R_1}^{T_2R_1}$ or $G_{T_1R_1}^{T_3R_1}$ to the tensor elements from the transmitter T1 and receiver R1.

FIG. 5A is a schematic drawing of an example downhole tool in accordance with another embodiment of the present disclosure. The tool includes transmitter sub 501 and receiver sub 502. Transmitter sub 501 has two transmitter antennas T1 and T2 placed in proximity to each other. T1 is a tilted antennas having a magnetic moment neither parallel nor orthogonal to the tool axis, and T2 is a transverse antenna having a magnetic moment perpendicular to the tool axis. Receiver sub 502 includes one tilted receiver antenna R1 having a magnetic moment neither parallel nor orthogonal to the tool axis, and one axial antenna R2 having a magnetic moment substantially parallel to the tool axis. The magnetic moments of the two transmitter and the tilted receiver antennas are in different azimuthal planes as shown in an end view in FIG. 5B, where $\Phi_{T1R1}$ and $\Phi_{T2R1}$ are azimuth angles of T1 and T2 with respect to the receiver R1, respectively. The two transmitters are in different azimuthal planes. All the transmitter and receiver antennas can operate at multiple frequencies suitable for logging tools. The two subs 501, 502 are spaced apart by a desired distance with one or more logging tools or spacers connected between them. Although the two transmitters are shown placed in proximity, they can be collocated. Furthermore, although the two transmitter antennas are shown located in a different sub than the two receivers, they may be placed in the same sub.

FIG. 10D, in conjunction with FIG. 10A and 10B, shows a flowchart for the embodiment of FIG. 5A to determine the EM tensor in accordance with the present disclosure. In this case, as compared to the embodiment of FIG. 4A, we will not have the transmitter T3 and receiver R1 pair. Instead we will have two other transmitter/receiver pairs which are:

the tilted transmitter T1 and axial receiver R2 pair, and the transverse transmitter T2 and axial receiver R2 pair. Therefore the steps will remain the same except for those involving transmitter T3 and receiver R1, which should be replaced by the transmitter T1 and receiver R2.

When the tilted transmitter T1 transmits electromagnetic field energy at a certain frequency, the induced voltage $V^{T1R2}(\Phi_{T_1})$ at the receiver R2 can be written according to an equation of the form:

$$V^{T_1 R_2}(\phi_{T_1}) = V_0^{T_1 R_2} + V_{1c}^{T_1 R_2} * \cos \phi_{T_1} + V_{1s}^{T_1 R_2} * \sin \phi_{T_1} \qquad \text{Eq. (28)}$$

where $\Phi_{T_1}$ is the azimuth angle of the magnetic moment of transmitter T1 relative to some reference. The induced voltage $V^{T1R2}(\Phi_{T_1})$ only involves the $0^{th}$ harmonic coefficient and the $1^{st}$ harmonic coefficients. One can determine coefficients $V_0^{T_1 R_2}$, $V_{1c}^{T_1 R_2}$ and $V_{1s}^{T_1 R_2}$ from the induced voltage $V^{T1R2}$ at a plurality of azimuth angles. For example, one can use, but is not limited to, the method described in U.S. Pat. No. 9,389,332 to determine the coefficients. Those coefficients can be expressed in a much simpler form as follows:

$$V_0^{T_1 R_2} = V_{zz}^{T_1 R_2} \cos(\theta_{T_1}) \qquad \text{Eq. (29a)}$$

$$V_{1c}^{T_1 R_2} = V_{zx}^{T_1 R_2} \sin(\theta_{T_1}) \qquad \text{Eq. (29b)}$$

$$V_{1s}^{T_1 R_2} = V_{zy}^{T_1 R_2} \sin(\theta_{T_1}) \qquad \text{Eq. (29c)}$$

In this case only three elements of the EM tensor $V_{zx}^{T_1 R_2}$, $V_{zy}^{T_1 R_2}$, and $V_{zz}^{T_1 R_2}$ contribute to the induced voltage $V^{T1R2}(\Phi_{T_1})$. If the receiver R2 is in close proximity or collocated with R1, the three elements of the EM tensor from transmitter T1 and receiver R2 are the same as those from the transmitter T1 and receiver R1 apart from a constant factor, which is the relative gain factor $G_{T_1 R_1}^{T_1 R_2}$ due to the construction of the antennas, the electronic drifts, etc. In other words:

$$G_{T_1 R_1}^{T_1 R_2} = \frac{V_{zx}^{T_1 R_2}}{V_{zx}^{T_1 R_1}} = \frac{V_{zy}^{T_1 R_2}}{V_{zy}^{T_1 R_1}} = \frac{V_{zz}^{T_1 R_2}}{V_{zz}^{T_1 R_1}} \qquad \text{Eq. (30)}$$

One can solve for $V_{zx}^{T_1 R_2}$, $V_{zy}^{T_1 R_2}$, and $V_{zz}^{T_1 R_2}$ from the coefficients $V_0^{T_1 R_2}$, $V_{1c}^{T_1 R_2}$, and $V_{1s}^{T_1 R_2}$ using Eqs. (29a), (29b), and (29c):

$$V_{zz}^{T_1 R_2} = V_0^{T_1 R_2}/\cos(\theta_{T_1}) \qquad \text{Eq. (31a)}$$

$$V_{zx}^{T_1 R_2} = V_{1c}^{T_1 R_2}/\sin(\theta_{T_1}) \qquad \text{Eq. (31b)}$$

$$V_{zy}^{T_1 R_2} = V_{1s}^{T_1 R_2}/\sin(\theta_{T_1}) \qquad \text{Eq. (31c)}$$

Then the gain factor $G_{T_1 R_1}^{T_1 R_2}$ can be determined by:

$$G_{T_1 R_1}^{T_1 R_2} = \frac{V_{zx}^{T_1 R_2}}{V_{zx}^{T_1 R_1}} \qquad \text{Eq. (32a)}$$

or

$$G_{T_1 R_1}^{T_1 R_2} = \frac{V_{zy}^{T_1 R_2}}{V_{zy}^{T_1 R_1}} \qquad \text{Eq. (32b)}$$

or any linear combination of both, or other ways using $V_{zx}^{T_1 R_2}$, $V_{zy}^{T_1 R_2}$, $V_{zx}^{T_1 R_1}$, and $V_{zy}^{T_1 R_1}$. The gain factor $G_{T_1 R_1}^{T_1 R_2}$ can then be used to solve for $V_{zz}^{T_1 R_1}$ together with Eq. (31a): $V_{zz}^{T_1 R_1} = V_0^{T_1 R_2}/\cos(\theta_{T_1}) G_{T_1 R_1}^{T_1 R_2}$ Eq. (33)

One can use the same equations Eq. (27a) and (27b) to find $V_{xx}^{T_1 R_1} + V_{yy}^{T_1 R_1}$ and $V_{xy}^{T_1 R_1} - V_{yx}^{T_1 R_1}$ where $V_{zz}^{T_1 R_1}$ is given by Eq. (33). Using the same steps as before all nine elements of the EM tensor $V_{xx}^{T_1 R_1}$, $V_{xy}^{T_1 R_1}$, $V_{xz}^{T_1 R_1}$, $V_{yx}^{T_1 R_1}$, $V_{yy}^{T_1 R_1}$, $V_{yz}^{T_1 R_1}$, $V_{zx}^{T_1 R_1}$, $V_{zy}^{T_1 R_1}$, and $V_{zz}^{T_1 R_1}$ from the transmitter T1 and receiver R1 can be completely determined.

One can use the transmitter T2 and receiver R2 to derive equations similar to Eqs. (31b) and (31c) using transmitter T1 and receiver R2. As a result, the relative gain $G_{T_1 R_2}^{T_2 R_2}$ can be easily calculated using $\frac{V_{zx}^{T_2 R_2}}{V_{zx}^{T_1 R_2}}$ or $\frac{V_{zy}^{T_2 R_2}}{V_{zy}^{T_1 R_2}}$. One can equate the relative gain factor $G_{T_1 R_1}^{T_2 R_1}$ with $G_{T_1 R_2}^{T_2 R_2}$, and solve for the relative azimuth angle between T1 and R1 (if it is not already known) from the following equation together with Eq. (22a):

$$G_{T_1 R_2}^{T_2 R_2} = \frac{V_{xx}^{T_2 R_1} - V_{yy}^{T_2 R_1}}{V_{xx}^{T_1 R_1} - V_{yy}^{T_1 R_1}} \qquad \text{Eq. (34)}$$

or from the following equation together with Eq. (22b):

$$G_{T_1 R_2}^{T_2 R_2} = \frac{V_{xy}^{T_2 R_1} + V_{yx}^{T_2 R_1}}{V_{xy}^{T_1 R_1} + V_{yx}^{T_1 R_1}} \qquad \text{Eq. (35)}$$

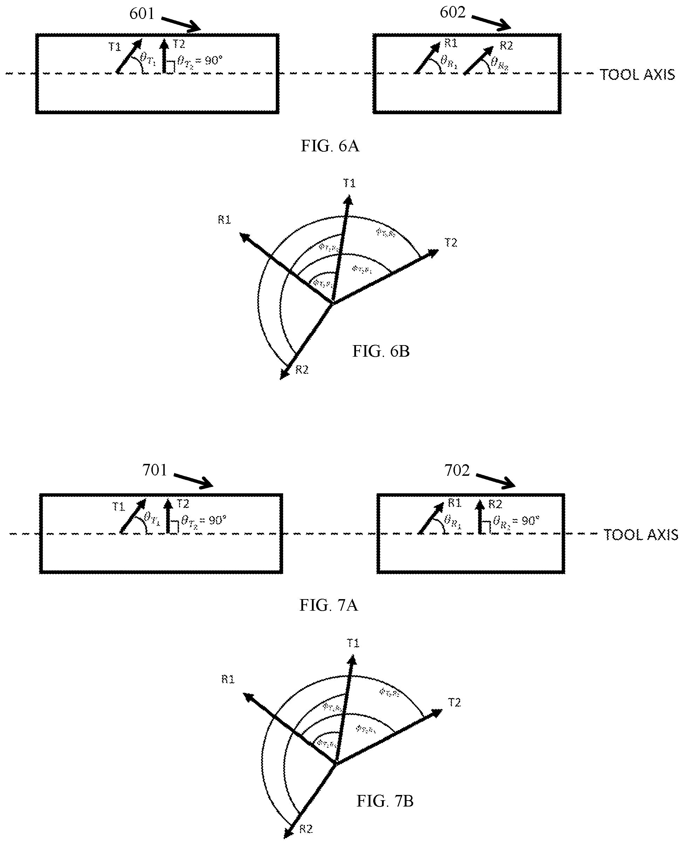

FIG. 6A is a schematic drawing of an example downhole tool in accordance with yet another embodiment of the present disclosure. The tool includes transmitter sub 601 and receiver sub 602. Transmitter sub 601 has two transmitter antennas T1 and T2, placed in proximity to each other. T1 is a tilted antenna having a magnetic moment neither parallel nor orthogonal to the tool axis, and T2 is a transverse antenna having a magnetic moment orthogonal to the tool axis. Receiver sub 602 includes two tilted receiver antennas R1 and R2 having magnetic moments neither parallel nor orthogonal to the tool axis. The magnetic moments of the two transmitters and one of the receiver antennas are in different azimuth planes as shown in an end view in FIG. 6B, where $\varPhi_{T_1 R_1}$ and $\varPhi_{T_2 R_1}$ are azimuth angles of T1 and T2 with respect to the receiver R1, respectively. The two transmitters are in different azimuthal planes, and the two receivers are also in different azimuthal planes. All the transmitter and receiver antennas can operate at multiple frequencies suitable for logging tools. The two subs are spaced apart by a desired distance with one or more logging tools or spacers connected between them. Although the two transmitters are shown placed in proximity, they can be collocated. Furthermore, although the two transmitter antennas are shown located in a different sub than the two receivers, they may be placed in the same sub.

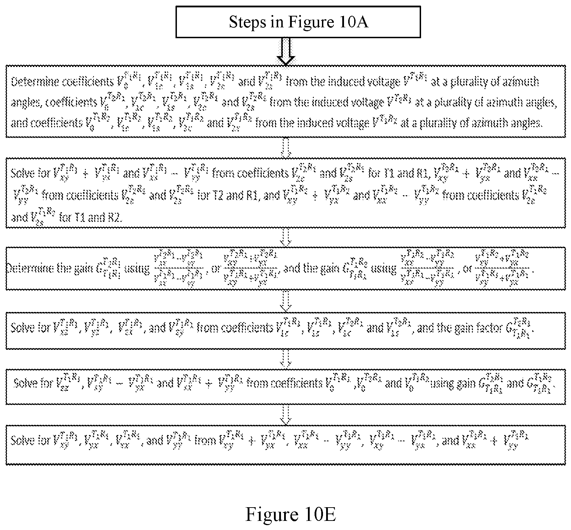

FIG. 10E, in conjunction with FIG. 10A, shows a flowchart for the embodiment of FIG. 6A to determine the EM tensor in accordance with the present disclosure. Furthermore, we can replace one the of the tilted receivers, such as R2 in FIG. 6A, with a transverse receiver antenna, i.e., an antenna having a magnetic dipole moment orthogonal to the tool axis, as shown in FIG. 7A, and can still solve for the nine elements of the EM coupling tensor in the same way, except for setting $\theta_{R_2} = \pi/2$ in the corresponding equations. The flowchart shown in FIG. 10E can also be used for this embodiment.

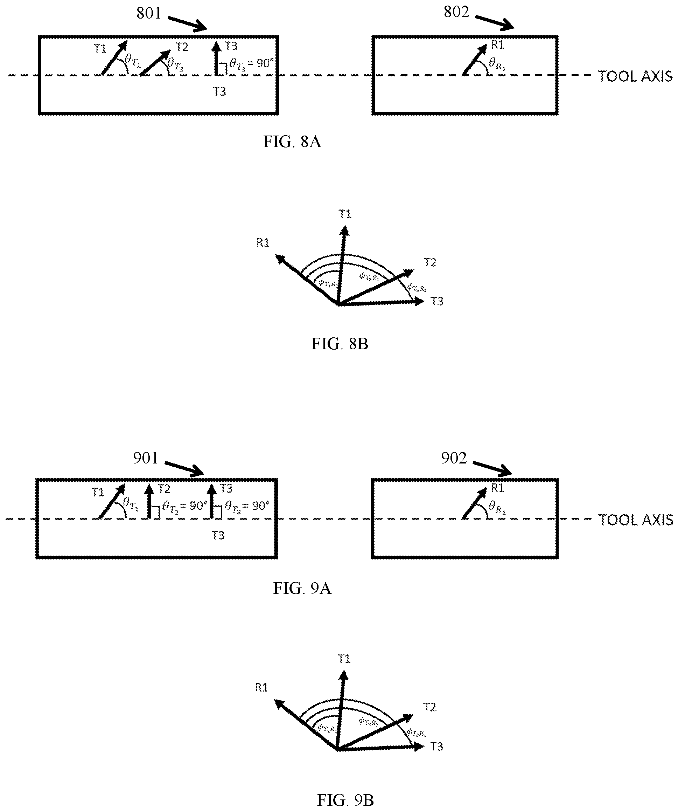

Alternatively, we can have a tool of two tilted transmitters, a transverse transmitter, and a tilted receiver as shown in FIG. 8A, or a tool of a tilted transmitter, two transverse transmitters, and a tilted receiver as shown in FIG. 9A.

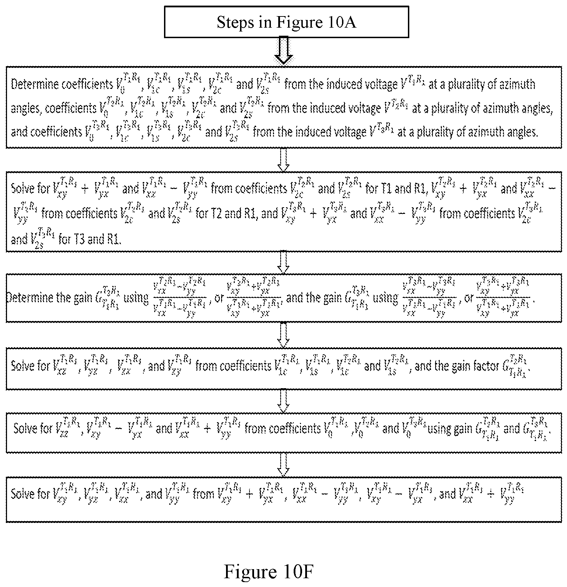

For both transmitter configurations, we can still solve for the nine elements of a EM coupling tensor in accordance with the flowchart shown in FIG. 10F.

As is understood in the art, under the principle of reciprocity, the roles of transmitters and receivers can be reversed such that, for example, the antennas in sub 201 can be used as receivers and the antennas in sub 202 can be used as transmitter(s). Furthermore, although only one transmitter sub is shown in the figures, one can extend to embodiments having multiple transmitter subs. Similarly, although only one receiver sub is shown in the figures, one can extend to embodiments having multiple receiver subs.

A processor is incorporated into the system. The processor may be carried on the downhole tool or it may be located on the surface, sending data or instructions to or receiving and processing data from wired or wireless components. The processor may comprise a non-transitory, computer-readable storage medium, which has stored therein one or more programs, the one or more programs comprising instructions to be executed by the processor.

Although a few example embodiments have been described in detail above, those skilled in the art will readily appreciate that many modifications are possible in the example embodiments without materially departing from this disclosure.

**Claims**

1. A method, comprising

   providing a downhole electromagnetic logging tool having two or more antenna groups spaced along a longitudinal axis of the logging tool, each antenna group comprising:

   one antenna (T1, T2, T3, R1, R2) or multiple antennas (T1, T2, T3, R1, R2) proximately located or collocated; and
   at least one antenna (T1, T2, T3, R1, R2) having a dipole moment that is tilted relative to the longitudinal axis of the logging tool,

   wherein at least one antenna group having, in addition to the at least one antenna having a dipole moment that is tilted relative to the longitudinal axis of the logging tool, at least one antenna (T1, T2, T3, R1, R2) having a dipole moment that is transverse or tilted relative to the longitudinal axis of the logging tool, and any given pair of antenna groups comprising at least four antennas (T1, T2, T3, R1, R2) with at most three of those antennas having dipole moments that are tilted relative to the longitudinal axis of the logging tool;
   the method further comprising disposing the logging tool in a wellbore penetrating a formation; and
   rotating the logging tool;
   the method further comprising, using a processor to perform the steps of:

   measuring a tool rotation angle while rotating the logging tool;
   transmitting an electromagnetic signal from one antenna group while rotating the logging tool;
   receiving the electromagnetic signal with another antenna group while rotating the logging tool;
   obtaining, from the received electromagnetic signal and the measured tool rotation angle, sufficient information to determine all of the elements of an electromagnetic coupling tensor;
   determining some or all of the elements of the electromagnetic coupling tensor using the obtained information; and inferring petrophysical properties of the formation using one or more elements of the determined electromagnetic coupling tensor.

2. The method of claim 1, wherein one antenna group is located in a transmitter sub (201) and another antenna group is located in a receiver sub (202).

3. The method of claim 1, wherein at least two of the multiple antennas (T1, T2, T3, R1, R2) in one of the antenna groups are collocated.

4. The method of claim 1, wherein at least two of the antenna groups can operate in a reciprocal manner.

5. The method of claim 1, wherein determining some or all of the elements of the electromagnetic coupling tensor comprises:

   determining one or more of the $0^{th}$, $1^{st}$, and $2^{nd}$ harmonic coefficients for a first transmitter/receiver antenna pair within a particular pair of antenna groups using the electromagnetic signal transmitted and received by the first transmitter/receiver antenna pair;

determining one or more of the $0^{th}$, $1^{st}$, and $2^{nd}$ harmonic coefficients for a second transmitter/receiver antenna pair within the particular pair of antenna groups using the electromagnetic signal transmitted and received by the second transmitter/receiver antenna pair;

determining one or more of the $0^{th}$, $1^{st}$, and $2^{nd}$ harmonic coefficients for a third transmitter/receiver antenna pair within the particular pair of antenna groups using the electromagnetic signal transmitted and received by the third transmitter/receiver antenna pair;

determining one or more linear combinations of particular coupling tensor elements using the determined harmonic coefficients;

determining one or more relative gains using the determined one or more linear combinations of particular coupling tensor elements; and

determining other particular coupling tensor elements using the determined harmonic coefficients and one or more of the determined relative gains.

6. The method of claim 5, wherein at least one of the three transmitter/receiver antenna pairs of claim 5 includes a tilted antenna (T1, T2, T3, R1, R2), and at least one of the three transmitter/receiver antenna pairs of claim 5 includes a transverse or axial antenna (T1, T2, T3, R1, R2).

7. The method of claim 1, further comprising making geosteering decisions or performing formation evaluation using the inferred properties.

8. An apparatus, comprising:

two or more antenna groups spaced along a longitudinal axis of an electromagnetic logging tool disposed in a wellbore penetrating a formation, each antenna group comprising:

one antenna (T1, T2, T3, R1, R2) or multiple antennas (T1, T2, T3, R1, R2) proximately located or collocated; and

at least one antenna (T1, T2, T3, R1, R2) having a dipole moment that is tilted relative to the longitudinal axis of the logging tool,

wherein at least one antenna group having, in addition to the at least one antenna having a dipole moment that is tilted relative to the longitudinal axis of the logging tool, at least one antenna (T1, T2, T3, R1, R2) having a dipole moment that is transverse or tilted relative to the longitudinal axis of the logging tool, and any given pair of antenna groups comprising at least four antennas (T1, T2, T3, R1, R2) with at most three of those antennas having dipole moments that are tilted relative to the longitudinal axis of the logging tool;

a logging tool rotation angle measuring device; and

a processor capable of:

controlling the transmission of electromagnetic energy from at least one antenna group;

controlling the reception of electromagnetic energy by at least one other antenna group;

controlling the measurement of a tool rotation angle by the tool rotation angle measuring device;

obtaining, based on the reception of the electromagnetic energy and the measurement of the tool rotation angle, sufficient information to determine all of the elements of an electromagnetic coupling tensor;

determining some or all of the elements of the electromagnetic coupling tensor using the obtained information; and

inferring petrophysical properties of the formation using the elements of the electromagnetic coupling tensor.

9. The apparatus of claim 8, wherein one antenna group is located in a transmitter sub (201) and another antenna group is located in a receiver sub (202).

10. The apparatus of claim 8, wherein the processor can further make geosteering decisions or perform formation evaluation using the inferred properties.

11. The apparatus of claim 8, wherein:

one of the antenna groups has two tilted antennas (T1, T2, T3, R1, R2) having dipole moments that are tilted relative to the longitudinal axis of the logging tool and an axial antenna (T1, T2, T3, R1, R2) having a dipole moment that is axial relative to the longitudinal axis of the logging tool;
another of the antenna groups has a tilted antenna (T1, T2, T3, R1, R2) having a dipole moment that is tilted relative to the longitudinal axis of the logging tool; and
wherein none of the planes containing the dipole moment of a tilted antenna and the longitudinal axis are parallel.

12. The apparatus of claim 8, wherein:

one of the antenna groups has two tilted antennas (T1, T2, T3, R1, R2) having dipole moments that are tilted relative to the longitudinal axis of the logging tool;
another of the antenna groups has a tilted antenna (T1, T2, T3, R1, R2) having a dipole moment that is tilted relative to the longitudinal axis of the logging tool and an axial antenna (T1, T2, T3, R1, R2) having a dipole moment that is axial relative to the longitudinal axis of the logging tool; and
wherein none of the planes containing the dipole moment of a tilted antenna and the longitudinal axis are co-planar.

13. The apparatus of claim 8, wherein:

one of the antenna groups has a tilted antenna (T1, T2, T3, R1, R2) having a dipole moment that is tilted relative to the longitudinal axis of the logging tool, a transverse antenna (T1, T2, T3, R1, R2) having a dipole moment that is transverse relative to the longitudinal axis of the logging tool, and an axial antenna (T1, T2, T3, R1, R2) having a dipole moment that is axial relative to the longitudinal axis of the logging tool;
another of the antenna groups has a tilted antenna (T1, T2, T3, R1, R2) having a dipole moment that is tilted relative to the longitudinal axis of the logging tool; and
wherein none of the planes containing the dipole moment of a tilted or transverse antenna and the longitudinal axis are co-planar.

14. The apparatus of claim 8, wherein:

one of the antenna groups has a tilted antenna (T1, T2, T3, R1, R2) having a dipole moment that is tilted relative to the longitudinal axis of the logging tool and a transverse antenna (T1, T2, T3, R1, R2) having a dipole moment that is transverse relative to the longitudinal axis of the logging tool;
another of the antenna groups has a tilted antenna (T1, T2, T3, R1, R2) having a dipole moment that is tilted relative to the longitudinal axis of the logging tool and an axial antenna (T1, T2, T3, R1, R2) having a dipole moment that is axial relative to the longitudinal axis of the logging tool; and
wherein none of the planes containing the dipole moment of a tilted or transverse antenna and the longitudinal axis are co-planar.

15. The apparatus of claim 8, wherein:

one of the antenna groups has a tilted antenna (T1, T2, T3, R1, R2) having a dipole moment that is tilted relative to the longitudinal axis of the logging tool and a transverse antenna (T1, T2, T3, R1, R2) having a dipole moment that is transverse relative to the longitudinal axis of the logging tool;
another of the antenna groups has two tilted antennas (T1, T2, T3, R1, R2) having dipole moments that are tilted relative to the longitudinal axis of the logging tool; and
wherein none of the planes containing the dipole moment of a tilted or transverse antenna and the longitudinal axis are co-planar.

16. The apparatus of claim 8, wherein:

one of the antenna groups has a tilted antenna (T1, T2, T3, R1, R2) having a dipole moment that is tilted relative to the longitudinal axis of the logging tool and a transverse antenna (T1, T2, T3, R1, R2) having a dipole moment that is transverse relative to the longitudinal axis of the logging tool;
another one of the antenna groups has a tilted antenna (T1, T2, T3, R1, R2) having a dipole moment that is tilted relative to the longitudinal axis of the logging tool and a transverse antenna (T1, T2, T3, R1, R2) having a dipole moment that is transverse relative to the longitudinal axis of the logging tool; and
wherein none of the planes containing the dipole moment of a tilted or transverse antenna and the longitudinal axis are co-planar.

**17.** The apparatus of claim 8, wherein:

one of the antenna groups has two tilted antennas (T1, T2, T3, R1, R2) having dipole moments that are tilted relative to the longitudinal axis of the logging tool and a transverse antenna (T1, T2, T3, R1, R2) having a dipole moment that is transverse relative to the longitudinal axis of the logging tool;
another of the antenna groups has a tilted antenna (T1, T2, T3, R1, R2) having a dipole moment that is tilted relative to the longitudinal axis of the logging tool; and
wherein none of the planes containing the dipole moment of a tilted or transverse antenna and the longitudinal axis are co-planar.

**18.** The apparatus of claim 8, wherein:

one of the antenna groups has two transverse antennas (T1, T2, T3, R1, R2) having dipole moments that are transverse relative to the longitudinal axis of the logging tool and a tilted antenna (T1, T2, T3, R1, R2) having a dipole moment that is tilted relative to the longitudinal axis of the logging tool;
another of the antenna groups has a tilted antenna (T1, T2, T3, R1, R2) having a dipole moment that is tilted relative to the longitudinal axis of the logging tool; and wherein none of the planes containing the dipole moment of a tilted or transverse antenna and the longitudinal axis are co-planar.

**19.** A non-transitory, computer-readable storage medium, which has stored therein one or more programs, the one or more programs comprising instructions, which when executed by a processor, cause the processor to perform a method comprising:

controlling the transmission of electromagnetic energy from at least one antenna group;
controlling the reception of electromagnetic energy by at least one other antenna group,
wherein each antenna group comprises one antenna or multiple antennas proximately located or collocated, and at least one antenna having a dipole moment that is tilted relative to the longitudinal axis of a logging tool, wherein at least one antenna group having, in addition to the at least one antenna having a dipole moment that is tilted relative to the longitudinal axis of the logging tool, at least one antenna having a dipole moment that is transverse or tilted relative to the longitudinal axis of the logging tool, and any given pair of antenna groups comprising at least four antennas with at most three of those antennas having dipole moments that are tilted relative to the longitudinal axis of the logging tool;
controlling the measurement of a tool rotation angle by a tool rotation angle measuring device;
obtaining, from the received electromagnetic signal and the measured tool rotation angle,
sufficient information to determine all of the elements of an electromagnetic coupling tensor;
determining some or all of the elements of the electromagnetic coupling tensor using the obtained information; and
inferring petrophysical properties of the formation using one or more elements of the determined electromagnetic coupling tensor.

**20.** The non-transitory, computer-readable storage medium of claim 19, wherein determining some or all of the elements of the electromagnetic coupling tensor comprises:

determining one or more of the $0^{th}$, $1^{st}$, and $2^{nd}$ harmonic coefficients for a first transmitter/receiver antenna pair within a particular pair of antenna groups using the electromagnetic signal transmitted and received by the first transmitter/receiver antenna pair;
determining one or more of the $0^{th}$, $1^{st}$, and $2^{nd}$ harmonic coefficients for a second transmitter/receiver antenna pair within the particular pair of antenna groups using the electromagnetic signal transmitted and received by the second transmitter/receiver antenna pair;
determining one or more of the $0^{th}$, $1^{st}$, and $2^{nd}$ harmonic coefficients for a third transmitter/receiver antenna pair within the particular pair of antenna groups using the electromagnetic signal transmitted and received by the third transmitter/receiver antenna pair;
determining one or more linear combinations of particular coupling tensor elements using the determined harmonic coefficients; determining one or more relative gains using the determined one or more linear combinations of particular coupling tensor elements; and
determining other particular coupling tensor elements using the determined harmonic coefficients and one or more of the determined relative gains.

**Patentansprüche**

1.  Ein Verfahren, umfassend:
    das Bereitstellen eines elektromagnetischen Bohrlochwerkzeugs mit zwei oder mehr Antennengruppen, die entlang einer Längsachse des Bohrlochwerkzeugs beabstandet sind, wobei jede Antennengruppe umfasst:

    eine Antenne (TI, T2, T3, R1, R2) oder mehrere Antennen (TI, T2, T3, R1, R2), die in der Nähe angeordnet oder zusammengestellt sind; und
    mindestens eine Antenne (TI, T2, T3, R1, R2) mit einem relativ zur Längsachse des Bohrlochwerkzeugs geneigten Dipolmoment,
    wobei mindestens eine Antennengruppe, zusätzlich zu der mindestens einen Antenne mit einem relativ zur Längsachse des Bohrlochwerkzeugs geneigten Dipolmoment, mindestens eine Antenne (TI, T2, T3, R1, R2) mit einem relativ zur Längsachse des Bohrlochwerkzeugs queren oder geneigten Dipolmoment hat, und ein beliebiges Paar von Antennengruppen mindestens vier Antennen (TI, T2, T3, R1, R2) umfasst, wobei höchstens drei dieser Antennen relativ zur Längsachse des Bohrlochwerkzeugs geneigte Dipolmomente haben;
    wobei das Verfahren ferner das Anordnen des Bohrlochwerkzeugs in einem Bohrloch umfasst, das eine Formation durchdringt; und
    das Drehen des Bohrlochwerkzeugs;
    wobei das Verfahren unter Verwendung eines Prozessors zum Ausführen der Schritte ferner umfasst:

    das Messen eines Werkzeugdrehwinkels während das Drehen des Bohrlochwerkzeugs;
    das Senden eines elektromagnetischen Signals von einer Antennengruppe während das Drehen des Bohrlochwerkzeugs;
    das Empfangen des elektromagnetischen Signals mit einer anderen Antennengruppe während das Drehen des Bohrlochwerkzeugs;
    das Erhalten, aus dem empfangenen elektromagnetischen Signal und dem gemessenen Werkzeugdrehwinkel, ausreichender Information, um alle Elemente eines elektromagnetischen Kopplungstensors zu bestimmen;
    das Bestimmen einiger oder aller Elemente des elektromagnetischen Kopplungstensors unter Verwendung der erhaltenen Information; und die Ableitung von petrophysikalischen Eigenschaften der Formation unter Verwendung eines oder mehrerer Elemente des bestimmten elektromagnetischen Kopplungstensors.

2.  Das Verfahren nach Anspruch 1, wobei eine Antennengruppe in einem Zusatzelement (201) des Übertragers positioniert ist und eine andere Antennengruppe in einem Zusatzelement (202) des Empfängers positioniert ist.

3.  Das Verfahren nach Anspruch 1, wobei mindestens zwei der mehreren Antennen (TI, T2, T3, R1, R2) in einer der Antennengruppen zusammengestellt sind.

4.  Das Verfahren nach Anspruch 1, wobei mindestens zwei der Antennengruppen im Gegenzug arbeiten können.

5.  Das Verfahren nach Anspruch 1, wobei das Bestimmen einiger oder aller Elemente des elektromagnetischen Kopplungstensors Folgendes umfasst:

    das Bestimmen eines oder mehrerer der Null-, ersten und zweiten Klirrfaktoren für ein erstes Übertrager/Empfänger-Antennenpaar innerhalb eines bestimmten Paars von Antennengruppen unter Verwendung des elektromagnetischen Signals, das von dem ersten Übertrager/Empfänger-Antennenpaar gesendet und empfangen wird;
    das Bestimmen eines oder mehrerer der Null-, ersten und zweiten Klirrfaktoren für ein zweites Übertrager/Empfänger-Antennenpaar innerhalb des bestimmten Paars von Antennengruppen unter Verwendung des elektromagnetischen Signals, das von dem zweiten Übertrager/Empfänger-Antennenpaar gesendet und empfangen wird;
    das Bestimmen eines oder mehrerer der Null-, ersten und zweiten Klirrfaktoren für ein drittes Übertrager/Empfänger-Antennenpaar innerhalb des bestimmten Paars von Antennengruppen unter Verwendung des elektromagnetischen Signals, das von dem dritten Übertrager/Empfänger-Antennenpaar gesendet und empfangen wird;
    das Bestimmen einer oder mehrerer linearer Kombinationen bestimmter Kopplungstensorelemente unter Verwendung der bestimmten Klirrfaktoren;
    das Bestimmen eines oder mehrerer Vergleichsfaktoren unter Verwendung der bestimmten einen oder mehreren linearen Kombinationen bestimmter Kopplungstensorelemente; und

das Bestimmen anderer bestimmter Kopplungstensorelemente unter Verwendung der bestimmten Klirrfaktoren und eines oder mehrerer der bestimmten Vergleichsfaktoren.

6. Das Verfahren nach Anspruch 5, wobei mindestens ein der drei Übertrager/Empfänger-Antennenpaare nach Anspruch 5 eine geneigte Antenne (T1, T2, T3, R1, R2) umfasst, und mindestens ein der drei Übertrager/Empfänger-Antennenpaare nach Anspruch 5 eine Quer- oder Axialantenne (T1, T2, T3, R1, R2) umfasst.

7. Das Verfahren nach Anspruch 1, wobei das Verfahren ferner das Treffen von Geosteuerungsentscheidungen oder das Durchführen einer Formationsbewertung unter Verwendung der gefolgerten Eigenschaften.

8. Eine Vorrichtung, umfassend:

zwei oder mehr Antennengruppen, die entlang einer Längsachse eines elektromagnetischen Bohrlochwerkzeugs, das in einem Bohrloch mit der Durchdringung einer Formation angeordnet ist, beabstandet sind, wobei jede Antennengruppe umfasst:

eine Antenne (Tl, T2, T3, R1, R2) oder mehrere Antennen (Tl, T2, T3, R1, R2), die in der Nähe angeordnet oder zusammengestellt sind; und

mindestens eine Antenne (Tl, T2, T3, R1, R2) mit einem relativ zur Längsachse des Bohrlochwerkzeugs geneigten Dipolmoment,

wobei mindestens eine Antennengruppe, zusätzlich zu der mindestens einen Antenne mit einem relativ zur Längsachse des Bohrlochwerkzeugs geneigten Dipolmoment, mindestens eine Antenne (Tl, T2, T3, R1, R2) mit einem relativ zur Längsachse des Bohrlochwerkzeugs queren oder geneigten Dipolmoment hat, und ein beliebiges Paar von Antennengruppen mindestens vier Antennen (Tl, T2, T3, R1, R2) umfasst, wobei höchstens drei dieser Antennen relativ zur Längsachse des Bohrlochwerkzeugs geneigte Dipolmomente haben;

eine Messvorrichtung für den Drehwinkel des Bohrlochwerkzeugs; und

einen Prozessor, der in der Lage ist:

die Übertragung elektromagnetischer Energie von mindestens einer Antennengruppe zu steuern;

den Empfang elektromagnetischer Energie durch mindestens eine andere Antennengruppe zu steuern;

die Messung eines Werkzeugdrehwinkels durch die Messvorrichtung für den Werkzeugdrehwinkel zu steuern;

basierend auf dem Empfang der elektromagnetischen Energie und der Messung des Werkzeugdrehwinkels ausreichende Information zu erhalten, um alle Elemente eines elektromagnetischen Kopplungstensors zu bestimmen;

einige oder alle Elemente des elektromagnetischen Kopplungstensors unter Verwendung der erhaltenen Information zu bestimmen; und

petrophysikalische Eigenschaften der Formation unter Verwendung der Elemente des elektromagnetischen Kopplungstensors abzuleiten.

9. Die Vorrichtung nach Anspruch 8, wobei eine Antennengruppe in einem Zusatzelement (201) des Übertragers positioniert ist und eine andere Antennengruppe in einem Zusatzelement (202) des Empfängers positioniert ist.

10. Die Vorrichtung nach Anspruch 8, wobei der Prozessor ferner unter Verwendung der gefolgerten Eigenschaften Geosteuerungsentscheidungen treffen oder eine Formationsbewertung durchführen kann.

11. Die Vorrichtung nach Anspruch 8, wobei:

eine der Antennengruppen zwei geneigte Antennen (T1, T2, T3, R1, R2) mit Dipolmomenten, die relativ zur Längsachse des Bohrlochwerkzeugs geneigt sind, und eine axiale Antenne (Tl, T2, T3, R1, R2) mit einem Dipolmoment, das relativ zur Längsachse des Bohrlochwerkzeugs axial ist, hat;

eine andere der Antennengruppen eine geneigte Antenne (Tl, T2, T3, R1, R2) mit einem relativ zur Längsachse des Bohrlochwerkzeugs geneigten Dipolmoment hat; und

wobei keine der das Dipolmoment einer geneigten Antenne enthaltenden Ebenen und die Längsachse parallel sind.

12. Die Vorrichtung nach Anspruch 8, wobei:

eine der Antennengruppen zwei geneigte Antennen (T1, T2, T3, R1, R2) mit Dipolmomenten hat, die relativ zur Längsachse des Bohrlochwerkzeugs geneigt sind;

eine andere der Antennengruppen eine geneigte Antenne (Tl, T2, T3, R1, R2) mit einem relativ zur Längsachse des Bohrlochwerkzeugs geneigten Dipolmoment und eine axiale Antenne (Tl, T2, T3, R1, R2) mit einem Dipolmoment, das relativ zur Längsachse des Bohrlochwerkzeugs axial ist; und

wobei keine der das Dipolmoment einer geneigten Antenne enthaltenden Ebenen und die Längsachse koplanar sind.

**13.** Die Vorrichtung nach Anspruch 8, wobei:

eine der Antennengruppen eine geneigte Antenne (T1, T2, T3, R1, R2) mit einem relativ zur Längsachse des Bohrlochwerkzeugs geneigten Dipolmoment, eine Querantenne (T1, T2, T3, R1, R2) mit einem relativ zur Längsachse des Bohrlochwerkzeugs queren Dipolmoment und eine axiale Antenne (Tl, T2, T3, R1, R2) mit einem Dipolmoment, das relativ zur Längsachse des Bohrlochwerkzeugs axial ist;

eine andere der Antennengruppen eine geneigte Antenne (Tl, T2, T3, R1, R2) mit einem relativ zur Längsachse des Bohrlochwerkzeugs geneigten Dipolmoment hat; und

wobei keine der das Dipolmoment einer geneigten oder queren Antenne enthaltenden Ebenen und die Längsachse koplanar sind.

**14.** Die Vorrichtung nach Anspruch 8, wobei:

eine der Antennengruppen eine geneigte Antenne (Tl, T2, T3, R1, R2) mit einem relativ zur Längsachse des Bohrlochwerkzeugs geneigten Dipolmoment und eine Querantenne (Tl, T2, T3, R1, R2) mit einem relativ zur Längsachse des Bohrlochwerkzeugs queren Dipolmoment hat;

eine andere der Antennengruppen eine geneigte Antenne (Tl, T2, T3, R1, R2) mit einem relativ zur Längsachse des Bohrlochwerkzeugs geneigten Dipolmoment und eine axiale Antenne (Tl, T2, T3, R1, R2) mit einem Dipolmoment, das relativ zur Längsachse des Bohrlochwerkzeugs axial ist; und

wobei keine der das Dipolmoment einer geneigten oder queren Antenne enthaltenden Ebenen und die Längsachse koplanar sind.

**15.** Die Vorrichtung nach Anspruch 8, wobei:

eine der Antennengruppen eine geneigte Antenne (Tl, T2, T3, R1, R2) mit einem relativ zur Längsachse des Bohrlochwerkzeugs geneigten Dipolmoment und eine Querantenne (Tl, T2, T3, R1, R2) mit einem relativ zur Längsachse des Bohrlochwerkzeugs queren Dipolmoment hat;

eine andere der Antennengruppen zwei geneigte Antennen (T1, T2, T3, R1, R2) mit Dipolmomenten hat, die relativ zur Längsachse des Bohrlochwerkzeugs geneigt sind; und

wobei keine der das Dipolmoment einer geneigten oder queren Antenne enthaltenden Ebenen und die Längsachse koplanar sind.

**16.** Die Vorrichtung nach Anspruch 8, wobei:

eine der Antennengruppen eine geneigte Antenne (Tl, T2, T3, R1, R2) mit einem relativ zur Längsachse des Bohrlochwerkzeugs geneigten Dipolmoment und eine Querantenne (Tl, T2, T3, R1, R2) mit einem relativ zur Längsachse des Bohrlochwerkzeugs queren Dipolmoment hat;

eine andere der Antennengruppen eine geneigte Antenne (T1, T2, T3, R1, R2) mit einem relativ zur Längsachse des Bohrlochwerkzeugs geneigten Dipolmoment und eine Querantenne (Tl, T2, T3, R1, R2) mit einem relativ zur Längsachse des Bohrlochwerkzeugs queren Dipolmoment hat; und

wobei keine der das Dipolmoment einer geneigten oder queren Antenne enthaltenden Ebenen und die Längsachse koplanar sind.

**17.** Die Vorrichtung nach Anspruch 8, wobei:

eine der Antennengruppen zwei geneigte Antennen (T1, T2, T3, R1, R2) mit Dipolmomenten, die relativ zur Längsachse des Bohrlochwerkzeugs geneigt sind, und eine Querantenne (Tl, T2, T3, R1, R2) mit einem Dipolmoment, das relativ zur Längsachse des Bohrlochwerkzeugs quer ist, hat;

eine andere der Antennengruppen eine geneigte Antenne (Tl, T2, T3, R1, R2) mit einem relativ zur Längsachse des Bohrlochwerkzeugs geneigten Dipolmoment hat; und

wobei keine der das Dipolmoment einer geneigten oder queren Antenne enthaltenden Ebenen und die Längsachse koplanar sind.

**18.** Die Vorrichtung nach Anspruch 8, wobei:

eine der Antennengruppen zwei geneigte Antennen (TI, T2, T3, R1, R2) mit Dipolmomenten, die relativ zur Längsachse des Bohrlochwerkzeugs quer sind, und eine geneigte Antenne (TI, T2, T3, R1, R2) mit einem relativ zur Längsachse des Bohrlochwerkzeugs geneigten Dipolmoment hat;
eine andere der Antennengruppen eine geneigte Antenne (TI, T2, T3, R1, R2) mit einem relativ zur Längsachse des Bohrlochwerkzeugs geneigten Dipolmoment hat; und
wobei keine der das Dipolmoment einer geneigten oder queren Antenne enthaltenden Ebenen und die Längsachse koplanar sind.

**19.** Ein nichtflüchtiges, computerlesbares Speichermedium, auf dem ein oder mehrere Programme gespeichert sind, wobei das eine oder die mehreren Programme Anweisungen umfassen, die, wenn sie mittels eines Prozessors ausgeführt werden, den Prozessor veranlassen, ein Verfahren durchzuführen, umfassend:

das Steuern der Übertragung elektromagnetischer Energie von mindestens einer Antennengruppe; das Steuern des Empfangs elektromagnetischer Energie durch mindestens eine andere Antennengruppe, wobei jede Antennengruppe eine Antenne oder mehrere Antennen, die in der Nähe angeordnet oder zusammengestellt sind, und mindestens eine Antenne mit einem relativ zur Längsachse des Bohrlochwerkzeugs geneigten Dipolmoment, hat, wobei mindestens eine Antennengruppe, zusätzlich zu der mindestens einen Antenne mit einem relativ zur Längsachse des Bohrlochwerkzeugs geneigten Dipolmoment, mindestens eine Antenne mit einem relativ zur Längsachse des Bohrlochwerkzeugs queren oder geneigten Dipolmoment hat, und ein beliebiges Paar von Antennengruppen mindestens vier Antennen umfasst, wobei höchstens drei dieser Antennen relativ zur Längsachse des Bohrlochwerkzeugs geneigte Dipolmomente haben;
das Steuern der Messung eines Werkzeugdrehwinkels durch eine Messvorrichtung für den Werkzeugdrehwinkel;
das Erhalten, aus dem empfangenen elektromagnetischen Signal und dem gemessenen Werkzeugdrehwinkel, ausreichender Information, um alle Elemente eines elektromagnetischen Kopplungstensors zu bestimmen; das Bestimmen einiger oder aller Elemente des elektromagnetischen Kopplungstensors unter Verwendung der erhaltenen Information; und
das Ableiten petrophysikalischer Eigenschaften der Formation unter Verwendung eines oder mehrerer Elemente des bestimmten elektromagnetischen Kopplungstensors.

**20.** Das nichtflüchtige, computerlesbare Speichermedium nach Anspruch 19, wobei das Bestimmen einiger oder aller Elemente des elektromagnetischen Kopplungstensors Folgendes umfasst:

das Bestimmen eines oder mehrerer der Null-, ersten und zweiten Klirrfaktoren für ein erstes Übertrager/Empfänger-Antennenpaar innerhalb eines bestimmten Paars von Antennengruppen unter Verwendung des elektromagnetischen Signals, das von dem ersten Übertrager/Empfänger-Antennenpaar gesendet und empfangen wird;
das Bestimmen eines oder mehrerer der Null-, ersten und zweiten Klirrfaktoren für ein zweites Übertrager/Empfänger-Antennenpaar innerhalb des bestimmten Paars von Antennengruppen unter Verwendung des elektromagnetischen Signals, das von dem zweiten Übertrager/Empfänger-Antennenpaar gesendet und empfangen wird;
das Bestimmen eines oder mehrerer der Null-, ersten und zweiten Klirrfaktoren für ein drittes Übertrager/Empfänger-Antennenpaar innerhalb des bestimmten Paars von Antennengruppen unter Verwendung des elektromagnetischen Signals, das von dem dritten Übertrager/Empfänger-Antennenpaar gesendet und empfangen wird;
das Bestimmen einer oder mehrerer linearer Kombinationen bestimmter Kopplungstensorelemente unter Verwendung der bestimmten Klirrfaktoren; das Bestimmen eines oder mehrerer Vergleichsfaktoren unter Verwendung der bestimmten einen oder mehreren linearen Kombinationen bestimmter Kopplungstensorelemente; und
das Bestimmen anderer bestimmter Kopplungstensorelemente unter Verwendung der bestimmten Klirrfaktoren und eines oder mehrerer der bestimmten Vergleichsfaktoren.

**Revendications**

1. Un procédé comprenant à
   fournir un outil de diagraphie électromagnétique de fond de trou ayant deux ou plusieurs groupes d'antennes espacés le long d'un axe longitudinal de l'outil de diagraphie, chaque groupe d'antennes comprenant:

   une antenne (TI, T2, T3, R1, R2) ou plusieurs antennes (TI, T2, T3, R1, R2) situées à proximité ou colocalisées; et
   au moins une antenne (TI, T2, T3, R1, R2) ayant un moment dipolaire incliné par rapport à l'axe longitudinal de l'outil de diagraphie,
   dans lequel au moins un groupe d'antennes ayant, en plus de la au moins une antenne ayant un moment dipolaire qui est incliné par rapport à l'axe longitudinal de l'outil de diagraphie, au moins une antenne (TI, T2, T3, R1, R2) ayant un moment dipolaire transversal ou incliné par rapport à l'axe longitudinal de l'outil de diagraphie, et toute dite paire de groupes d'antennes comprenant au moins quatre antennes (TI, T2, T3, R1, R2) avec au plus trois de ces antennes ayant des moments dipolaires qui sont inclinés par rapport à l'axe longitudinal de l'outil de diagraphie;
   le procédé comprenant en outre à disposer l'outil de diagraphie dans un puits de forage pénétrant dans une formation; et
   à mettre en rotation l'outil de diagraphie;
   le procédé comprenant en outre à utiliser un processeur pour effectuer les étapes consistant à:

   mesurer un angle de rotation d'outil tout en mettant en rotation l'outil de diagraphie;
   transmettre un signal électromagnétique d'un groupe d'antennes tout en mettant en rotation l'outil de diagraphie;
   recevoir le signal électromagnétique par un autre groupe d'antennes tout en mettant en rotation l'outil de diagraphie;
   obtenir, à partir du signal électromagnétique reçu et de l'angle de rotation de l'outil mesuré, une information suffisante pour déterminer tous les éléments d'un tenseur de liaison électromagnétique;
   déterminer certains ou tous des éléments du tenseur de liaison électromagnétique en utilisant l'information obtenue; et déduire les propriétés pétrophysiques de la
   formation en utilisant un ou plusieurs éléments du tenseur de liaison électromagnétique déterminés.

2. Le procédé selon la revendication 1, dans lequel un groupe d'antennes est situé dans un sous-émetteur (201) et un autre groupe d'antennes est situé dans un sous-récepteur (202).

3. Le procédé selon la revendication 1, dans lequel au moins deux des plusieurs antennes (TI, T2, T3, R1, R2) dans l'un des groupes d'antennes sont colocalisées.

4. Le procédé selon la revendication 1, dans lequel au moins deux des groupes d'antennes peuvent fonctionner de manière réciproque.

5. Le procédé selon la revendication 1, dans lequel la détermination de certains ou tous des éléments du tenseur de liaison électromagnétique comprend à:

   déterminer un ou plusieurs des coefficients de la $0^{ème}$, $1^{ère}$ et $2^{ème}$ harmonique pour une première paire d'antennes émettrice/réceptrice dans une paire particulière de groupes d'antennes en utilisant le signal électromagnétique émis et reçu par la première paire d'antennes émettrice/réceptrice;
   déterminer un ou plusieurs des coefficients de la $0^{ème}$, $1^{ère}$ et $2^{ème}$ harmonique pour une deuxième paire d'antennes émettrice/réceptrice dans la paire particulière de groupes d'antennes en utilisant le signal électromagnétique émis et reçu par la deuxième paire d'antennes émettrice/réceptrice;
   déterminer un ou plusieurs des coefficients de la $0^{ème}$, $1^{ère}$ et $2^{ème}$ harmonique pour une troisième paire d'antennes émettrice/réceptrice dans la paire particulière de groupes d'antennes en utilisant le signal électromagnétique émis et reçu par la troisième paire d'antennes émettrice/réceptrice;
   déterminer une ou plusieurs combinaisons linéaires d'éléments d'un tenseur de liaison particuliers en utilisant les coefficients des harmoniques déterminés;
   déterminer un ou plusieurs gains relatifs en utilisant l'une ou les plusieurs combinaisons linéaires déterminées d'éléments d'un tenseur de liaison particuliers; et
   déterminer autres éléments d'un tenseur de liaison particuliers en utilisant les coefficients des harmoniques déterminés et un ou plusieurs des gains relatifs déterminés.

**6.** Le procédé selon la revendication 5, dans lequel au moins l'une des trois paires d'antennes émettrices/réceptrices de la revendication 5 comprend une antenne inclinée (TI, T2, T3, R1, R2), et au moins l'une des trois paires d'antennes émettrices/réceptrices de la revendication 5 comprend une antenne transversale ou axiale (T1, T2, T3, R1, R2).

**7.** Le procédé selon la revendication 1, comprenant en outre à prendre décisions de géodirection ou réaliser l'évaluation de formation en utilisant les propriétés déduites.

**8.** Un appareil comprenant:
deux ou plusieurs groupes d'antennes espacés le long d'un axe longitudinal de l'outil de diagraphie électromagnétique disposé dans un puits de forage pénétrant dans une formation, chaque groupe d'antennes comprenant:

une antenne (TI, T2, T3, R1, R2) ou plusieurs antennes (TI, T2, T3, R1, R2) situées à proximité ou colocalisées; et
au moins une antenne (TI, T2, T3, R1, R2) ayant un moment dipolaire incliné par rapport à l'axe longitudinal de l'outil de diagraphie,
dans lequel au moins un groupe d'antennes ayant, en plus de la au moins une antenne ayant un moment dipolaire qui est incliné par rapport à l'axe longitudinal de l'outil de diagraphie, au moins une antenne (TI, T2, T3, R1, R2) ayant un moment dipolaire transversal ou incliné par rapport à l'axe longitudinal de l'outil de diagraphie, et toute dite paire de groupes d'antennes comprenant au moins quatre antennes (TI, T2, T3, R1, R2) avec au plus trois de ces antennes ayant des moments dipolaires qui sont inclinés par rapport à l'axe longitudinal de l'outil de diagraphie;
un dispositif à mesurer l'angle de rotation de l'outil de diagraphie; et
un processeur capable de:

contrôler la transmission d'énergie électromagnétique d'au moins un groupe d'antennes;
contrôler la réception d'énergie électromagnétique par au moins un autre groupe d'antennes;
contrôler la mesure d'un angle de rotation de l'outil par le dispositif à mesurer l'angle de rotation de l'outil;
obtenir, à partir de la réception de l'énergie électromagnétique et de la mesure de l'angle de rotation de l'outil, une information suffisante pour déterminer tous les éléments d'un tenseur de liaison électromagnétique;
déterminer certains ou tous des éléments du tenseur de liaison électromagnétique en utilisant l'information obtenue; et
déduire les propriétés pétrophysiques
de la formation en utilisant les éléments du tenseur de liaison électromagnétique.

**9.** L'appareil selon la revendication 8, dans lequel un groupe d'antennes est situé dans un sous-émetteur (201) et un autre groupe d'antennes est situé dans un sous-récepteur (202).

**10.** L'appareil selon la revendication 8, dans lequel le processeur peut en outre prendre décisions de géodirection ou réaliser l'évaluation de formation en utilisant les propriétés déduites.

**11.** L'appareil selon la revendication 8, dans lequel:

un des groupes d'antennes a deux antennes inclinées (TI, T2, T3, R1, R2) ayant des moments dipolaires qui sont inclinés par rapport à l'axe longitudinal de l'outil de diagraphie et une antenne axiale (TI, T2, T3, R1, R2) ayant un moment dipolaire qui est axial par rapport à l'axe longitudinal de l'outil de diagraphie;
un autre des groupes d'antennes a une antenne inclinée (TI, T2, T3, R1, R2) ayant un moment dipolaire incliné par rapport à l'axe longitudinal de l'outil de diagraphie; et
dans lequel aucun des plans contenant le moment dipolaire d'une antenne inclinée et l'axe longitudinal n'est parallèle.

**12.** L'appareil selon la revendication 8, dans lequel:

un des groupes d'antennes a deux antennes inclinées (TI, T2, T3, R1, R2) ayant des moments dipolaires qui sont inclinés par rapport à l'axe longitudinal de l'outil de diagraphie;
un autre des groupes d'antennes a une antenne inclinée (TI, T2, T3, R1, R2) ayant un moment dipolaire qui est incliné par rapport à l'axe longitudinal de l'outil de diagraphie et une antenne axiale (TI, T2, T3, R1, R2 ) ayant un moment dipolaire qui est axial par rapport à l'axe longitudinal de l'outil de diagraphie; et
dans lequel aucun des plans contenant le moment dipolaire d'une antenne inclinée et l'axe longitudinal n'est coplanaire.

**13.** L'appareil selon la revendication 8, dans lequel:

un des groupes d'antennes a une antenne inclinée (Tl, T2, T3, R1, R2) ayant un moment dipolaire qui est incliné par rapport à l'axe longitudinal de l'outil de diagraphie, une antenne transversale (Tl, T2, T3, R1, R2 ) ayant un moment dipolaire qui est transversal par rapport à l'axe longitudinal de l'outil de diagraphie, et une antenne axiale (Tl, T2, T3, R1, R2) ayant un moment dipolaire qui est axial par rapport à l'axe longitudinal de l'outil de diagraphie;

un autre des groupes d'antennes a une antenne inclinée (Tl, T2, T3, R1, R2) ayant un moment dipolaire incliné par rapport à l'axe longitudinal de l'outil de diagraphie; et

dans lequel aucun des plans contenant le moment dipolaire d'une antenne inclinée ou transversale et l'axe longitudinal n'est coplanaire.

**14.** L'appareil selon la revendication 8, dans lequel:

un des groupes d'antennes a une antenne inclinée (Tl, T2, T3, R1, R2) ayant un moment dipolaire qui est incliné par rapport à l'axe longitudinal de l'outil de diagraphie et une antenne transversale (Tl, T2, T3, R1, R2 ) ayant un moment dipolaire qui est transversal par rapport à l'axe longitudinal de l'outil de diagraphie;

un autre des groupes d'antennes a une antenne inclinée (Tl, T2, T3, R1, R2) ayant un moment dipolaire qui est incliné par rapport à l'axe longitudinal de l'outil de diagraphie et une antenne axiale (Tl, T2, T3, R1, R2 ) ayant un moment dipolaire qui est axial par rapport à l'axe longitudinal de l'outil de diagraphie; et

dans lequel aucun des plans contenant le moment dipolaire d'une antenne inclinée ou transversale et l'axe longitudinal n'est coplanaire.

**15.** L'appareil selon la revendication 8, dans lequel:

un des groupes d'antennes a une antenne inclinée (Tl, T2, T3, R1, R2) ayant un moment dipolaire qui est incliné par rapport à l'axe longitudinal de l'outil de diagraphie et une antenne transversale (Tl, T2, T3, R1, R2 ) ayant un moment dipolaire qui est transversal par rapport à l'axe longitudinal de l'outil de diagraphie;

un autre des groupes d'antennes a deux antennes inclinées (Tl, T2, T3, R1, R2) ayant des moments dipolaires qui sont inclinés par rapport à l'axe longitudinal de l'outil de diagraphie; et

dans lequel aucun des plans contenant le moment dipolaire d'une antenne inclinée ou transversale et l'axe longitudinal n'est coplanaire.

**16.** L'appareil selon la revendication 8, dans lequel:

un des groupes d'antennes a une antenne inclinée (Tl, T2, T3, R1, R2) ayant un moment dipolaire qui est incliné par rapport à l'axe longitudinal de l'outil de diagraphie et une antenne transversale (Tl, T2, T3, R1, R2 ) ayant un moment dipolaire qui est transversal par rapport à l'axe longitudinal de l'outil de diagraphie;

un autre des groupes d'antennes a une antenne inclinée (T1, T2, T3, R1, R2) ayant un moment dipolaire qui est incliné par rapport à l'axe longitudinal de l'outil de diagraphie et une antenne transversale (T1, T2, T3, R1, R2) ayant un moment dipolaire qui est transversal par rapport à l'axe longitudinal de l'outil de diagraphie; et

dans lequel aucun des plans contenant le moment dipolaire d'une antenne inclinée ou transversale et l'axe longitudinal n'est coplanaire.

**17.** L'appareil selon la revendication 8, dans lequel:

un des groupes d'antennes a deux antennes inclinées (T1, T2, T3, R1, R2) ayant des moments dipolaires qui sont inclinés par rapport à l'axe longitudinal de l'outil de diagraphie et une antenne transversale (T1, T2, T3, R1, R2) ayant un moment dipolaire qui est transversal par rapport à l'axe longitudinal de l'outil de diagraphie;

un autre des groupes d'antennes a une antenne inclinée (T1, T2, T3, R1, R2) ayant un moment dipolaire incliné par rapport à l'axe longitudinal de l'outil de diagraphie; et

dans lequel aucun des plans contenant le moment dipolaire d'une antenne inclinée ou transversale et l'axe longitudinal n'est coplanaire.

**18.** L'appareil selon la revendication 8, dans lequel:

un des groupes d'antennes a deux antennes transversales (T1, T2, T3, R1, R2) ayant des moments dipolaires qui sont transversaux par rapport à l'axe longitudinal de l'outil de diagraphie et une antenne inclinée (T1, T2, T3, R1, R2) ayant un moment dipolaire qui est incliné par rapport à l'axe longitudinal de l'outil de diagraphie;

un autre des groupes d'antennes a une antenne inclinée (T1, T2, T3, R1, R2) ayant un moment dipolaire incliné par rapport à l'axe longitudinal de l'outil de diagraphie; et

dans lequel aucun des plans contenant le moment dipolaire d'une antenne inclinée ou transversale et l'axe longitudinal n'est coplanaire.

19. Un support non volatile exploitable sur machine, qui contient un ou plusieurs programmes stockés, l'un ou les plusieurs programmes comprenant des instructions qui, lorsqu'elles sont exécutées par un processeur, amènent le processeur à exécuter un procédé comprenant à:

contrôler la transmission d'énergie électromagnétique d'au moins un groupe d'antennes; contrôler la réception d'énergie électromagnétique par au moins un autre groupe d'antennes, dans lequel chaque groupe d'antennes comprenant une antenne ou plusieurs antennes situées à proximité ou colocalisées, et au moins une antenne ayant un moment dipolaire qui est incliné par rapport à l'axe longitudinal de l'outil de diagraphie, dans lequel au moins un groupe d'antennes ayant, en plus de la au moins une antenne ayant un moment dipolaire qui est incliné par rapport à l'axe longitudinal de l'outil de diagraphie, au moins une antenne ayant un moment dipolaire transversal ou incliné par rapport à l'axe longitudinal de l'outil de diagraphie, et toute dite paire de groupes d'antennes comprenant au moins quatre antennes avec au plus trois de ces antennes ayant des moments dipolaires qui sont inclinés par rapport à l'axe longitudinal de l'outil de diagraphie;

contrôler la mesure d'un angle de rotation de l'outil par un dispositif à mesurer l'angle de rotation de l'outil;

obtenir, à partir du signal électromagnétique reçu et de l'angle de rotation de l'outil mesuré, une information suffisante pour déterminer tous les éléments d'un tenseur de liaison électromagnétique; déterminer certains ou tous des éléments du tenseur de liaison électromagnétique en utilisant l'information obtenue; et

déduire les propriétés pétrophysiques de la formation en utilisant un ou plusieurs éléments du tenseur de liaison électromagnétique déterminés.

20. Le support non volatile exploitable sur machine selon la revendication 19, dans lequel la détermination de certains ou tous des éléments du tenseur de liaison électromagnétique comprend à:

déterminer un ou plusieurs des coefficients de la $0^{ème}$, $1^{ère}$ et $2^{ème}$ harmonique pour une première paire d'antennes émettrice/réceptrice dans une paire particulière de groupes d'antennes en utilisant le signal électromagnétique émis et reçu par la première paire d'antennes émettrice/réceptrice;

déterminer un ou plusieurs des coefficients de la $0^{ème}$, $1^{ère}$ et $2^{ème}$ harmonique pour une deuxième paire d'antennes émettrice/réceptrice dans la paire particulière de groupes d'antennes en utilisant le signal électromagnétique émis et reçu par la deuxième paire d'antennes émettrice/réceptrice;

déterminer un ou plusieurs des coefficients de la $0^{ème}$, $1^{ère}$ et $2^{ème}$ harmonique pour une troisième paire d'antennes émettrice/réceptrice dans la paire particulière de groupes d'antennes en utilisant le signal électromagnétique émis et reçu par la troisième paire d'antennes émettrice/réceptrice;

déterminer une ou plusieurs combinaisons linéaires d'éléments d'un tenseur de liaison particuliers en utilisant les coefficients des harmoniques déterminés; déterminer un ou plusieurs gains relatifs en utilisant l'une ou les plusieurs combinaisons linéaires déterminées d'éléments d'un tenseur de liaison particuliers; et

déterminer autres éléments d'un tenseur de liaison particuliers en utilisant les coefficients des harmoniques déterminés et un ou plusieurs des gains relatifs déterminés.

Figure 1A
(Prior Art)

Figure 1B
(Prior Art)

Figure 2A

Figure 2B

Figure 3A

Figure 3B

FIG. 4A

FIG. 4B

FIG. 5A

FIG. 5B

FIG. 6A

FIG. 6B

FIG. 7A

FIG. 7B

801

T1   T2   T3
$\theta_{T_1}$   $\theta_{T_2}$   $\theta_{T_3} = 90°$

T3

802

R1
$\theta_{R_1}$

TOOL AXIS

FIG. 8A

T1

R1   T2

$\theta_{T_1,R_1}$   $\theta_{T_2,R_1}$

T3

FIG. 8B

901

T1   T2   T3
$\theta_{T_1}$   $\theta_{T_2} = 90°$   $\theta_{T_3} = 90°$

T3

902

R1
$\theta_{R_1}$

TOOL AXIS

FIG. 9A

T1

R1   T2

$\theta_{T_1,R_1}$   $\theta_{T_2,R_1}$   $\theta_{T_3,R_1}$

T3

FIG. 9B

Disposing downhole tool in a borehole. ———— 1001

Transmitting electromagnetic energy from transmitters ———— 1003

Rotating the tool in the borehole through a plurality of azimuth angles. ———— 1005

Figure 10A

Determine coefficients $V_0^{T_1R_1}$, $V_{1c}^{T_1R_1}$, $V_{1s}^{T_1R_1}$, $V_{2c}^{T_1R_1}$ and $V_{2s}^{T_1R_1}$ from the induced voltage $V^{T_1R_1}$ at a plurality of azimuth angles, coefficients $V_0^{T_2R_1}$, $V_{1c}^{T_2R_1}$, $V_{1s}^{T_2R_1}$, $V_{2c}^{T_2R_1}$ and $V_{2s}^{T_2R_1}$ from the induced voltage $V^{T_2R_1}$ at a plurality of azimuth angles, and coefficients $V_0^{T_3R_1}$, $V_{1c}^{T_3R_1}$, and $V_{1s}^{T_3R_1}$ from the induced voltage $V^{T_3R_1}$ at a plurality of azimuth angles. ———— 1007

Solve for $V_{xy}^{T_1R_1} + V_{yx}^{T_1R_1}$ and $V_{xx}^{T_1R_1} - V_{yy}^{T_1R_1}$ from coefficients $V_{2c}^{T_1R_1}$ and $V_{2s}^{T_1R_1}$ for T1 and R1, $V_{xy}^{T_2R_1} + V_{yx}^{T_2R_1}$ and $V_{xx}^{T_2R_1} - V_{yy}^{T_2R_1}$ from coefficients $V_{2c}^{T_2R_1}$ and $V_{2s}^{T_2R_1}$ for T2 and R1. ———— 1009

Determine the relative gain $G_{T_1R_1}^{T_2R_1}$ using $\dfrac{V_{xx}^{T_2R_1}-V_{yy}^{T_2R_1}}{V_{xx}^{T_1R_1}-V_{yy}^{T_1R_1}}$, or $\dfrac{V_{xy}^{T_2R_1}+V_{yx}^{T_2R_1}}{V_{xy}^{T_1R_1}+V_{yx}^{T_1R_1}}$, or a linear combination of both. ———— 1011

Solve for $V_{xz}^{T_3R_1}$, $V_{yz}^{T_3R_1}$, $V_{zx}^{T_3R_1}$, and $V_{zy}^{T_3R_1}$ from coefficients $V_{1c}^{T_3R_1}$, $V_{1s}^{T_3R_1}$, $V_{1c}^{T_2R_1}$ and $V_{1s}^{T_2R_1}$, and the gain factor $G_{T_3R_1}^{T_2R_1}$. ———— 1013

Figure 10B

Steps in Figures 10A and 10B

Determine coefficients $V_0^{T_3 R_1}$, $V_{1c}^{T_3 R_1}$, and $V_{1s}^{T_3 R_1}$ from the induced voltage $V^{T_3 R_1}$ at a plurality of azimuth angles. — 1015

Solve for $V_{xz}^{T_3 R_1}$, $V_{yz}^{T_3 R_1}$, and $V_{zz}^{T_3 R_1}$ from coefficients $V_0^{T_3 R_1}$, $V_{1c}^{T_3 R_1}$, and $V_{1s}^{T_3 R_1}$. — 1017

Determine the relative gain $G_{T_1 R_1}^{T_3 R_1}$ using $\frac{V_{xz}^{T_3 R_1}}{V_{xz}^{T_1 R_1}}$, or $\frac{V_{yz}^{T_3 R_1}}{V_{yz}^{T_1 R_1}}$, or a linear combination of both. — 1019

Solve for $V_{zz}^{T_1 R_1}$ by dividing $V_{zz}^{T_3 R_1}$ by the gain factor $G_{T_1 R_1}^{T_3 R_1}$ — 1021

Solve for $V_{xy}^{T_3 R_1} - V_{yx}^{T_3 R_1}$ and $V_{xx}^{T_3 R_1} + V_{yy}^{T_3 R_1}$ from coefficients $V_0^{T_1 R_1}$ and $V_0^{T_3 R_1}$ using gain factor $G_{T_1 R_1}^{T_3 R_1}$ and $V_{zz}^{T_1 R_1}$. — 1023

Solve for $V_{xy}^{T_3 R_1}$, $V_{yx}^{T_3 R_1}$, $V_{xx}^{T_3 R_1}$, and $V_{yy}^{T_3 R_1}$ from $V_{xy}^{T_3 R_1} + V_{yx}^{T_3 R_1}$, $V_{xx}^{T_3 R_1} - V_{yy}^{T_3 R_1}$, $V_{xy}^{T_3 R_1} - V_{yx}^{T_3 R_1}$, and $V_{xx}^{T_3 R_1} + V_{yy}^{T_3 R_1}$ — 1025

Figure 10C

| Steps in Figures 10A and 10B |

Determine coefficients $V_0^{T_1 R_2}$, $V_{1c}^{T_1 R_2}$, and $V_{1s}^{T_1 R_2}$ from the induced voltage $V^{T_1 R_2}$ at a plurality of azimuth angles. — 1027

Solve for $V_{zz}^{T_1 R_2}$, $V_{xy}^{T_1 R_2}$, and $V_{zz}^{T_1 R_2}$ from coefficients $V_0^{T_1 R_2}$, $V_{1c}^{T_1 R_2}$, and $V_{1s}^{T_1 R_2}$. — 1029

Determine the relative gain $G_{T_1 R_1}^{T_1 R_2}$ using $\frac{V_{zz}^{T_1 R_2}}{V_{zz}^{T_1 R_1}}$, or $\frac{V_{zz}^{T_1 R_2}}{V_{xy}^{T_1 R_1}}$, or a linear combination of both. — 1031

Solve for $V_{zz}^{T_1 R_1}$ by dividing $V_{zz}^{T_1 R_2}$ by the gain factor $G_{T_1 R_1}^{T_1 R_2}$ — 1033

Solve for $V_{xy}^{T_1 R_1} - V_{yx}^{T_1 R_1}$ and $V_{xx}^{T_1 R_1} + V_{yy}^{T_1 R_1}$ from coefficients $V_0^{T_1 R_1}$ and $V_0^{T_1 R_1}$ using gain factor $G_{T_1 R_1}^{T_1 R_1}$ and $V_{zz}^{T_1 R_1}$. — 1035

Solve for $V_{xy}^{T_1 R_1}$, $V_{yx}^{T_1 R_1}$, $V_{xx}^{T_1 R_1}$, and $V_{yy}^{T_1 R_1}$ from $V_{xy}^{T_1 R_1} + V_{yx}^{T_1 R_1}$, $V_{xx}^{T_1 R_1} - V_{yy}^{T_1 R_1}$, $V_{xy}^{T_1 R_1} - V_{yx}^{T_1 R_1}$, and $V_{xx}^{T_1 R_1} + V_{yy}^{T_1 R_1}$. — 1037

Figure 10D

Steps in Figure 10A

Determine coefficients $V_0^{T_1 R_1}$, $V_{1c}^{T_1 R_1}$, $V_{1s}^{T_1 R_1}$, $V_{2c}^{T_1 R_1}$ and $V_{2s}^{T_1 R_1}$ from the induced voltage $V^{T_1 R_1}$ at a plurality of azimuth angles, coefficients $V_0^{T_2 R_1}$, $V_{1c}^{T_2 R_1}$, $V_{1s}^{T_2 R_1}$, $V_{2c}^{T_2 R_1}$ and $V_{2s}^{T_2 R_1}$ from the induced voltage $V^{T_2 R_1}$ at a plurality of azimuth angles, and coefficients $V_0^{T_1 R_2}$, $V_{1c}^{T_1 R_2}$, $V_{1s}^{T_1 R_2}$, $V_{2c}^{T_1 R_2}$ and $V_{2s}^{T_1 R_2}$ from the induced voltage $V^{T_1 R_2}$ at a plurality of azimuth angles.

Solve for $V_{xy}^{T_1 R_1} + V_{yx}^{T_1 R_1}$ and $V_{xx}^{T_1 R_1} - V_{yy}^{T_1 R_1}$ from coefficients $V_{2c}^{T_1 R_1}$ and $V_{2s}^{T_1 R_1}$ for T1 and R1, $V_{xy}^{T_2 R_1} + V_{yx}^{T_2 R_1}$ and $V_{xx}^{T_2 R_1} - V_{yy}^{T_2 R_1}$ from coefficients $V_{2c}^{T_2 R_1}$ and $V_{2s}^{T_2 R_1}$ for T2 and R1, and $V_{xy}^{T_1 R_2} + V_{yx}^{T_1 R_2}$ and $V_{xx}^{T_1 R_2} - V_{yy}^{T_1 R_2}$ from coefficients $V_{2c}^{T_1 R_2}$ and $V_{2s}^{T_1 R_2}$ for T1 and R2.

Determine the gain $G_{T_2 R_1}^{T_1 R_1}$ using $\frac{V_{xy}^{T_1 R_1} - V_{yx}^{T_1 R_1}}{V_{xy}^{T_2 R_1} - V_{yx}^{T_2 R_1}}$, or $\frac{V_{xx}^{T_1 R_1} + V_{yy}^{T_1 R_1}}{V_{xx}^{T_2 R_1} + V_{yy}^{T_2 R_1}}$, and the gain $G_{T_1 R_2}^{T_1 R_1}$ using $\frac{V_{xx}^{T_1 R_1} - V_{yy}^{T_1 R_1}}{V_{xx}^{T_1 R_2} - V_{yy}^{T_1 R_2}}$, or $\frac{V_{yy}^{T_1 R_1} + V_{xx}^{T_1 R_1}}{V_{yy}^{T_1 R_2} + V_{xx}^{T_1 R_2}}$.

Solve for $V_{xx}^{T_1 R_1}$, $V_{yy}^{T_1 R_1}$, $V_{xx}^{T_2 R_1}$, and $V_{xy}^{T_1 R_2}$ from coefficients $V_{1c}^{T_1 R_1}$, $V_{1s}^{T_1 R_1}$, $V_{1c}^{T_2 R_1}$ and $V_{1s}^{T_1 R_2}$, and the gain factor $G_{T_1 R_1}^{T_1 R_1}$.

Solve for $V_{zz}^{T_1 R_1}$, $V_{xy}^{T_1 R_1} - V_{yx}^{T_1 R_1}$ and $V_{xx}^{T_1 R_1} + V_{yy}^{T_1 R_1}$ from coefficients $V_0^{T_1 R_1}$, $V_0^{T_2 R_1}$ and $V_0^{T_1 R_2}$ using gain $G_{T_2 R_1}^{T_1 R_1}$ and $G_{T_1 R_2}^{T_1 R_1}$.

Solve for $V_{xy}^{T_1 R_1}$, $V_{yx}^{T_1 R_1}$, $V_{xx}^{T_1 R_1}$, and $V_{yy}^{T_1 R_1}$ from $V_{xy}^{T_1 R_1} + V_{yx}^{T_1 R_1}$, $V_{xy}^{T_1 R_1} - V_{yx}^{T_1 R_1}$, $V_{xx}^{T_1 R_1} - V_{yy}^{T_1 R_1}$, $V_{xy}^{T_1 R_1} - V_{yx}^{T_1 R_1}$, and $V_{xx}^{T_1 R_1} + V_{yy}^{T_1 R_1}$

Figure 10E

Steps in Figure 10A

⇓

Determine coefficients $V_0^{T_1R_1}$, $V_{1c}^{T_1R_1}$, $V_{1s}^{T_1R_1}$, $V_{2c}^{T_1R_1}$ and $V_{2s}^{T_1R_1}$ from the induced voltage $V^{T_1R_1}$ at a plurality of azimuth angles, coefficients $V_0^{T_2R_1}$, $V_{1c}^{T_2R_1}$, $V_{1s}^{T_2R_1}$, $V_{2c}^{T_2R_1}$ and $V_{2s}^{T_2R_1}$ from the induced voltage $V^{T_2R_1}$ at a plurality of azimuth angles, and coefficients $V_0^{T_3R_1}$, $V_{1c}^{T_3R_1}$, $V_{1s}^{T_3R_1}$, $V_{2c}^{T_3R_1}$ and $V_{2s}^{T_3R_1}$ from the induced voltage $V^{T_3R_1}$ at a plurality of azimuth angles.

⇓

Solve for $V_{xy}^{T_1R_1} + V_{yx}^{T_1R_1}$ and $V_{xx}^{T_1R_1} - V_{yy}^{T_1R_1}$ from coefficients $V_{2c}^{T_1R_1}$ and $V_{2s}^{T_1R_1}$ for T1 and R1, $V_{xy}^{T_2R_1} + V_{yx}^{T_2R_1}$ and $V_{xx}^{T_2R_1} - V_{yy}^{T_2R_1}$ from coefficients $V_{2c}^{T_2R_1}$ and $V_{2s}^{T_2R_1}$ for T2 and R1, and $V_{xy}^{T_3R_1} + V_{yx}^{T_3R_1}$ and $V_{xx}^{T_3R_1} - V_{yy}^{T_3R_1}$ from coefficients $V_{2c}^{T_3R_1}$ and $V_{2s}^{T_3R_1}$ for T3 and R1.

⇓

Determine the gain $G_{T_1R_1}^{T_2R_1}$ using $\frac{V_{xx}^{T_2R_1}-V_{yy}^{T_2R_1}}{V_{xx}^{T_1R_1}-V_{yy}^{T_1R_1}}$, or $\frac{V_{xy}^{T_2R_1}+V_{yx}^{T_2R_1}}{V_{xy}^{T_1R_1}+V_{yx}^{T_1R_1}}$, and the gain $G_{T_1R_1}^{T_3R_1}$ using $\frac{V_{xx}^{T_3R_1}-V_{yy}^{T_3R_1}}{V_{xx}^{T_1R_1}-V_{yy}^{T_1R_1}}$, or $\frac{V_{xy}^{T_3R_1}+V_{yx}^{T_3R_1}}{V_{xy}^{T_1R_1}+V_{yx}^{T_1R_1}}$.

⇓

Solve for $V_{xz}^{T_1R_1}$, $V_{yz}^{T_1R_1}$, $V_{zx}^{T_1R_1}$, and $V_{zy}^{T_1R_1}$ from coefficients $V_{1c}^{T_1R_1}$, $V_{1s}^{T_1R_1}$, $V_{1c}^{T_2R_1}$ and $V_{1s}^{T_2R_1}$, and the gain factor $G_{T_1R_1}^{T_2R_1}$.

⇓

Solve for $V_{zz}^{T_1R_1}$, $V_{xy}^{T_1R_1} - V_{yx}^{T_1R_1}$ and $V_{xx}^{T_1R_1} + V_{yy}^{T_1R_1}$ from coefficients $V_0^{T_1R_1}$, $V_0^{T_2R_1}$ and $V_0^{T_3R_1}$ using gain $G_{T_1R_1}^{T_2R_1}$ and $G_{T_1R_1}^{T_3R_1}$.

⇓

Solve for $V_{xy}^{T_1R_1}$, $V_{yx}^{T_1R_1}$, $V_{xx}^{T_1R_1}$, and $V_{yy}^{T_1R_1}$ from $V_{xy}^{T_1R_1} + V_{yx}^{T_1R_1}$, $V_{xx}^{T_1R_1} - V_{yy}^{T_1R_1}$, $V_{xy}^{T_1R_1} - V_{yx}^{T_1R_1}$, and $V_{xx}^{T_1R_1} + V_{yy}^{T_1R_1}$

Figure 10F

**EP 3 497 486 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 23668216
- US 5508616 A
- US 6163155 A
- US 6476609 B
- US 7656160 B
- US 8466683 B
- US 7755361 B
- US 20140292340 A
- US 9389332 B
- US 7656160 A
- US 2011140701 A1
- US 7239145 B2